(19) Europäisches Patentamt
European Patent Office
Office européen des brevets

(11) **EP 4 425 482 B1**

(12) **EUROPEAN PATENT SPECIFICATION**

(45) Date of publication and mention
of the grant of the patent:
**03.09.2025 Bulletin 2025/36**

(21) Application number: **22909972.6**

(22) Date of filing: **20.12.2022**

(51) International Patent Classification (IPC):
**G10L 21/003** (2013.01)    **G10L 13/02** (2013.01)

(52) Cooperative Patent Classification (CPC):
**G10L 21/003; G10L 13/02**

(86) International application number:
**PCT/CN2022/140253**

(87) International publication number:
**WO 2023/116660 (29.06.2023 Gazette 2023/26)**

(54) **MODEL TRAINING AND TONE CONVERSION METHOD AND APPARATUS, DEVICE, AND MEDIUM**

MODELLTRAININGS- UND TONUMWANDLUNGSVERFAHREN UND -VORRICHTUNG, VORRICHTUNG UND MEDIUM

PROCÉDÉ ET APPAREIL D'ENTRAÎNEMENT DE MODÈLE ET DE CONVERSION DE TONALITÉ, DISPOSITIF ET SUPPORT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.12.2021 CN 202111577618**

(43) Date of publication of application:
**04.09.2024 Bulletin 2024/36**

(73) Proprietor: **BIGO TECHNOLOGY PTE. LTD.**
**Singapore 117440 (SG)**

(72) Inventors:
• **HUANG, Jiahong**
  **Guangzhou, Guangdong 511402 (CN)**
• **LI, Yule**
  **Guangzhou, Guangdong 511402 (CN)**
• **XIANG, Wei**
  **Guangzhou, Guangdong 511402 (CN)**

(74) Representative: **Yang, Shu**
**Withers & Rogers LLP**
**2 London Bridge**
**London SE1 9RA (GB)**

(56) References cited:
WO-A1-2020/236990    CN-A- 111 785 261
CN-A- 112 037 754    CN-A- 112 382 271
CN-A- 112 652 318    CN-A- 113 053 356
CN-A- 113 470 622    CN-A- 113 689 868
CN-A- 114 333 865

• RJ SKERRY-RYAN ET AL: "Towards End-to-End Prosody Transfer for Expressive Speech Synthesis with Tacotron", ARXIV.ORG, CORNELL UNIVERSITY LIBRARY, 201 OLIN LIBRARY CORNELL UNIVERSITY ITHACA, NY 14853, 24 March 2018 (2018-03-24), XP080862501
• WANG YUXUAN ET AL: "Style Tokens: Unsupervised Style Modeling, Control and Transfer in End-to-End Speech Synthesis", 23 March 2018 (2018-03-23), XP093214488, Retrieved from the Internet <URL:https://arxiv.org/pdf/1803.09017>
• GUSTAV EJE HENTER ET AL: "Deep Encoder-Decoder Models for Unsupervised Learning of Controllable Speech Synthesis", ARXIV.ORG, CORNELL UNIVERSITY LIBRARY, 201 OLIN LIBRARY CORNELL UNIVERSITY ITHACA, NY 14853, 30 July 2018 (2018-07-30), XP081120069

## Description

### TECHNICAL FIELD

The present disclosure relates to the technical field of natural language understanding, and in particular, relates to a method for model training, a method for tone conversion, an apparatus, a device, and a medium.

### BACKGROUND

Tone conversion is important in the field of audio and is widely used in areas such as audio content generation, entertainment audio production, and secure calls. Tone conversion refers to the process of tone conversion of a voice in the original audio to the tone of another speaker's voice. In the process of tone conversion, it is necessary to ensure that the tone of the converted audio is similar to that of the speaker's voice, while the content of the audio remains unchanged. The difficulty in tone conversion is how to maintain the content information of the original audio unchanged while performing the tone conversion.

Accordingly, how to perform the tone conversion and achieve a stable tone conversion effect is a technical problem to be solved. From RJ SKERRY-RYAN ET AL: "Towards End-to-End Prosody Transfer for Expressive Speech Synthesis with Tacotron",ARXIV.ORG, CORNELL UNIVERSITY LIBRARY, 201 OLIN LIBRARY CORNELL UNIVERSITY ITHACA, NY 14853, 24 March 2018 (2018-03-24), a system is known that learns a latent embedding space of prosody, derived from a reference acoustic representation containing the desired prosody.It is an object of the invention to overcome the shortcomings in the prior art. This object of the invention is solved by the independent claims. Specific embodiments are defined in the dependent claims.

### SUMMARY

Embodiments of the present disclosure provide a method for model training, a method for tone conversion, an apparatus, and a medium, which solve the problem of low reliability of tone conversion due to a poor conversion effect of conventional tone conversion.

According to some embodiments of the present disclosure, a method for training a tone conversion model is provided. The method includes:

acquiring a sample set, wherein the sample set contains sample audio data of different speakers, each piece of the sample audio data corresponding to target audio data, the target audio data and the sample audio data having same semantic information;

acquiring a first tone feature of any piece of the sample audio data by a tone extraction network in an original tone conversion model; acquiring a first semantic feature based on the first tone feature and a linear spectrum corresponding to the sample audio data by a tone removal network in the original tone conversion model, wherein the first semantic feature is a feature in the sample audio data that is not related to a tone of the speaker but is related to the semantic information; and acquiring synthesized audio data based on the first semantic feature and a second tone feature of the target audio data corresponding to the sample audio data by a vocoder in the original tone conversion model; and

acquiring a trained tone conversion model by training the original tone conversion model based on the target audio data and synthesized audio data corresponding to each piece of the sample audio data.

According to some embodiments of the present disclosure, a method for tone conversion is provided. The method includes:

acquiring source audio data and a tone feature of a target speaker;

acquiring a tone feature of the source audio data by a tone extraction network in a pre-trained tone conversion model;

acquiring a semantic feature based on the tone feature and a linear spectrum corresponding to the source audio data by a tone removal network in the tone conversion model, wherein the semantic feature is a feature in the source audio data that is not related to a tone of a speaker but is related to semantic information; and acquiring synthesized audio data based on the semantic feature and the tone feature of the target speaker by a vocoder in the tone conversion model.

Some embodiments of the present disclosure provide an apparatus for training a tone conversion model. The apparatus includes:

an acquiring unit, configured to acquire a sample set, wherein the sample set contains sample audio data of different speakers, each piece of the sample audio data corresponding to a piece of target audio data, the target audio data and the sample audio data having same semantic information;

a processing unit, configured to: acquire a first tone feature of any piece of the sample audio data by a tone extraction network in an original tone conversion model; acquire a first semantic feature based on the first tone feature and a linear spectrum corresponding to the sample audio data by a tone removal network in the original tone conversion model, wherein the first semantic feature is a feature in the sample audio data that is not related to a tone of the speaker but is related to the semantic information; and acquire synthesized audio data based on the first semantic feature and a second tone feature of target audio data corresponding to the sample audio data by a vocoder in the original tone conversion model; and

a training unit, configured to acquire a trained tone conversion model by training the original tone conversion model based on the target audio data and synthesized audio data corresponding to each piece of the sample audio data.

Some embodiments of the present disclosure provide an apparatus for tone conversion. The apparatus includes:

an acquiring module, configured to acquire source audio data and a tone feature of a target speaker; and

a synthesizing module, configured to: acquire a tone feature of the source audio data by a tone extraction network in a pre-trained tone conversion model; acquire a semantic feature based on the tone feature and a linear spectrum corresponding to the source audio data by a tone removal network in the tone conversion model, wherein the semantic feature is a feature in the source audio data that is not related to a tone of a speaker but is related to semantic information; and acquire synthesized audio data based on the semantic feature and the tone feature of the target speaker by a vocoder in the tone conversion model.

According to some embodiments of the present disclosure, a computer-readable storage medium is provided. The computer-readable storage medium stores at least one computer program therein, wherein the at least one computer program, when loaded and run by a processor, causes the processor to perform the method for training the tone conversion model as described above or the method for tone conversion as described above.

According to some embodiments of the present disclosure, a computer program product is provided. The computer program product includes at least one computer program therein, wherein the at least one computer program, when loaded and run by a processor, causes the processor to perform the method for training the tone conversion model as described above or the method for tone conversion as described above.

Because there is no need to label the sample audio data in the sample set in advance during the training of the tone conversion model, no cost is spent on labeling the sample audio data, which facilitates subsequent training of the tone conversion model based on the sample audio data in the sample set. The tone extraction network, the tone removal network, and the vocoder are included in the original tone conversion model, and thus the first tone feature of the input sample audio data is acquired by the tone extraction network, such that the tone information of the input sample audio data is accurately acquired, which is conducive to subsequently acquiring the synthesized audio data based on the tone feature, and to improving the accuracy of the tone of the synthesized audio data. Based on the first tone feature, the first semantic feature of the input sample audio data is acquired by the tone removal network, such that the feature in the sample audio data that is not related to the tone of the speaker but is related to the speaking content is accurately acquired, which facilitates the subsequent acquiring of the synthesized audio data based on the first semantic feature, and guarantees the accuracy of the speaking content of the synthesized audio data. By this vocoder, the synthesized audio data is acquired based on the first semantic feature and the second tone feature of the target audio data corresponding to the sample audio data. Based on the target audio data and synthesized audio data corresponding to each piece of the sample audio data, the original tone conversion model is trained to acquire the trained tone conversion model, such that the unsupervised training of the tone conversion model is achieved, and thus the difficulty of acquiring the tone conversion model is greatly reduced. Subsequently, the tone conversion is achieved based on the trained tone conversion model, which improves the conversion effect and reliability of the tone conversion.

## BRIEF DESCRIPTION OF DRAWINGS

For clearer descriptions of the technical solutions in the embodiments of the present disclosure, the following briefly introduces the accompanying drawings to be required in the descriptions of the embodiments. Apparently, the accompanying drawings in the following description show merely some embodiments of the present disclosure, and persons of ordinary skills in the art may still derive other drawings from these accompanying drawings without creative efforts.

FIG. 1 is a schematic diagram of a training process of a tone conversion model according to some embodiments of the present disclosure;

FIG. 2 is a schematic structural diagram of a tone conversion model according to some embodiments of the present disclosure;

FIG. 3 is a schematic diagram of a tone conversion process according to some embodiments of the present disclosure;

FIG. 4 is a schematic structural diagram of a tone conversion model according to some embodiments of the present disclosure;

FIG. 5 is a schematic structural diagram of an apparatus for training a tone conversion model according to some embodiments of the present disclosure;

FIG. 6 is a schematic structural diagram of an apparatus for tone conversion according to some embodiments of the present disclosure;

FIG. 7 is a schematic structural diagram of an electronic device according to some embodiments of the present disclosure; and

FIG. 8 is a schematic structural diagram of another electronic device according to some embodiments of the present disclosure.

## DETAILED DESCRIPTION

The present disclosure is described in further detail with reference to the accompanying drawings, to clearly present the objects, technical solutions, and advantages of the present disclosure. It is clear that the described embodiments are only a part of the embodiments of the present disclosure and not all of the embodiments. Based on the embodiments in this disclosure, all other embodiments acquired by those skilled in the art without creative labor fall within the scope of protection of this application.

Those skilled in the art shall know that the embodiments of the present disclosure can be implemented as a system, a device, an apparatus, a method, or a computer program product. Accordingly, the present disclosure may be specifically realized in full hardware, full software (including firmware, resident software, and microcode.), or a combination of hardware and software.

In the context herein, it should be understood that any number of elements in the accompanying drawings are used for exemplary purposes and not as a limitation, as well as any naming is used for differentiation only and does not have any limiting connotations.

Currently, the tone conversion based on text-to-speech (TTS), tone conversion based on automatic speech recognition (ASR), tone conversion based on generative adversarial networks (GAN), and tone conversion based on the variational auto encoder (VAE) are used to achieve tone conversion. When using these methods for tone conversion, for the accuracy of the speaking content of the synthesized audio data, tone features in the synthesized audio data that are not related to the semantic content, such as sighs, screams, or the like, may not be ensured, and thus the naturalness of the synthesized audio data and the tone conversion effect are degraded.

Taking the tone conversion based on ASR as an example, in this method, a pre-trained ASR model is generally used to extract semantic information from the audio and tone information in the audio data of the target speaker is extracted by the tone extraction model, and based on the semantic information and the tone information, synthesized audio data of the target speaker is generated. Since this method relies heavily on the pre-trained ASR model, the accuracy of the ASR model directly affects the tone conversion effect of the synthesized audio data. Meanwhile, the ASR model mainly focuses on semantic extraction, but ignores the other tone information in the audio data that is not related to the semantic content, such as tone, and thus the synthesized audio data loses the tone and other information that is not related to the semantic content.

Taking the tone conversion based on TTS as an example, in the method, upon capture of a large amount of audio data of the target speaker in advance, an acoustic model of the target speaker and a vocoder are acquired by training based on each piece of the collected audio data as well as the semantic information corresponding to each piece of the audio data, respectively. Subsequently, based on the text features of the text information and the trained acoustic model and vocoder of the target speaker, the synthesized audio data of the target speaker is acquired. As it is generally necessary to collect more than 30,000 sentences or 30 hours of audio data of the target speaker in advance to ensure the accuracy of the acoustic model and vocoder of the target speaker, it is necessary to label the semantics of each piece of audio data, which increases the difficulty of acquiring the acoustic model and vocoder of the target speaker, and the cost consumed is very large. Moreover, other tone information such as tone in the acquired synthesized audio data is relatively fixed, which degrades the naturalness of the synthesized audio data and the effect of tone conversion.

To solve the above problems, some embodiments of the present disclosure provide a method for model training, a method for tone conversion, an apparatus, a device, and a medium. As there is no need to label the sample audio data in the sample set in advance during the process of training the tone conversion model, no cost is spent on labeling the sample audio data, and it is convenient to train the tone conversion model based on the sample audio data in the sample set in the subsequent process. The original tone conversion model includes the tone extraction network, the tone removal network, and the vocoder. The first tone feature of the input sample audio data is acquired by the tone extraction network, such that the tone information of the input sample audio data is acquired accurately, which is conducive to subsequently acquiring the synthesized audio data based on the tone feature and improving the accuracy of the tone of the synthesized audio data. Based on the first tone feature, the first semantic feature of the input sample audio data is acquired accurately by the tone removal network, such that the feature in the sample audio data that is not related to the tone of the speaker but is related to the speaking content is acquired accurately, which is conducive to subsequently acquiring the synthesized audio data based on the first semantic feature and guaranteeing the accuracy of the speaking content of the synthesized audio data. With the vocoder, the synthesized audio data is acquired based on the first semantic feature and the second tone feature of the target audio data corresponding to the sample audio data. Based on the target audio data and synthesized audio data corresponding to each piece of sample audio data, the original tone conversion model is trained to acquire the trained tone conversion model, such that the unsupervised training of the tone conversion model is achieved and the difficulty of acquiring the tone conversion model is greatly reduced. Subsequently, the tone conversion is achieved based on the trained tone conversion model, such that the conversion effect and reliability of the tone conversion are improved.

It should be noted that the application scenarios referred to in the above embodiments are only exemplary scenarios proposed for the convenience of illustration, and do not indicate any limitation to the application scenarios of the method for model training, the method for tone conversion, the apparatus, the device, and the medium according to the embodiments of the present disclosure. Those skilled in the art shall know that as new business scenarios emerge, the technical solutions according to the embodiments of the present disclosure are equally applicable to solving similar technical problems.

Embodiment 1

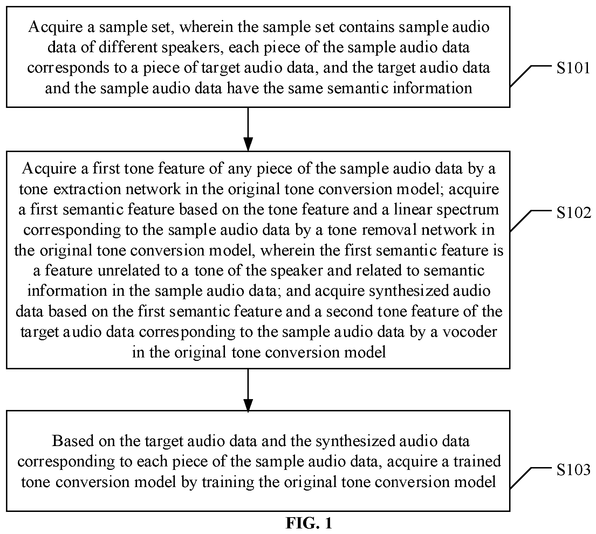

FIG. 1 is a schematic diagram of a training process of a tone conversion model according to some embodiments of the present disclosure. The process includes the following steps.

In S101, a sample set is acquired, wherein the sample set contains sample audio data of different speakers, each piece of the sample audio data corresponds to a piece of target audio data, and the target audio data and the sample audio data have the same semantic information.

The method for training a tone conversion model according to some embodiments of the present disclosure is applicable to an electronic device, which is an intelligent device such as a robot, a mobile terminal, or a server.

Generally, audio data of different speakers is collected, and the audio data is determined as the sample audio data. An original tone synthesis model is first trained based on such sample audio data, such that the trained tone synthesis model is acquired, which improves the robustness of the tone conversion model as well as the types of tones that can be synthesized by the tone conversion model.

In some embodiments of the present disclosure, the sample audio data is acquired in S101 in at least one of the following ways.

In the first way, the audio data acquired by recording different speakers is determined as the sample audio data.

In the process of collecting the sample audio data, the speaker records voice data in a professional recording environment and determines the recorded voice data as the sample audio data, or records voice data by a smart terminal (e.g., mobile phone, tablet computer, or the like), and determines the sample audio data based on the recorded voice data.

For example, the speaker inputs a trigger operation to the smart terminal. There are many ways in which the speaker inputs the trigger operation to the smart terminal, and the trigger operation indicates that the speaker triggers a virtual button displayed on a display screen of the smart terminal, or the speaker inputs a voice message to the smart terminal, or the speaker draws a graphic instruction on the display screen of the smart terminal, which is set in the specific implementation and is not limited herein. Upon receiving the trigger operation input by the speaker, the smart terminal uploads the prerecorded voice data selected by the speaker to the electronic device, or the smart terminal enters voice recording, starts a real-time recording of the voice data of the speaker, and uploads a plurality of recorded voice data to the electronic device, and thus the electronic device determines the sample audio data based on the received voice data.

The speaker does not need to go to a professional recording environment to record the voice data, and the voice data is recorded by the smart terminal, therefore, the difficulty and the cost of acquiring the voice data of the speaker are reduced, and the user experience is greatly improved.

When recording the voice data by the smart terminal, the voice data acquired by recording by the smart terminal is determined as original voice data of the speaker. Since a large amount of noise from the working environment is present in the original voice data, the original voice data acquired by recording is first subjected to audio processing. For example, the noise reduction processing and/or de-reverberation processing is performed on the original voice data, such that clean voice data is acquired. The voice data experiencing audio processing is then determined as the sample audio data.

It should be noted that the specific processes of performing the noise reduction processing and/or de-reverberation processing on this original voice data are prior art and are not specifically described herein.

In a second way, based on the first way, at least two pieces of voice data of the same speaker are spliced, and the spliced voice data acquired the splicing process is determined as the sample audio data, which expands the acquired sample audio data. In this way, the difficulty and cost of acquiring the sample audio data are further reduced, which is beneficial to train the tone conversion model based on the acquired large amount of sample audio data, such that the accuracy and robustness of the acquired tone conversion model are improved.

In some possible embodiments, based on the above first way, splicing the at least two pieces of voice data of the same speaker, and determining the spliced voice data acquired upon the splicing process as the sample audio data includes the following manners.

In the first manner, the voice data acquired by recording based on the first way is determined as base voice data. The base voice data is the original voice data in the above embodiments or the voice data upon the audio processing in the above embodiments. For a different speaker, at least two different pieces of base voice data of the speaker are spliced to determine the spliced voice data (noted as the first spliced voice data for description). Each of the base voice samples and each piece of the first spliced voice data are determined as the sample audio data.

In the second manner, the voice data acquired by recording based on the first way is determined as base voice data. For a different speaker, at least one piece of the base voice data of the speaker is copied to a set multiple, and the at least one piece of the copied voice data is spliced with the corresponding base voice data to determine the spliced voice data (noted as the second spliced voice data for description). It will be appreciated that this second spliced voice data is spliced from at least two identical pieces of voice data. Each of the base voice samples and each piece of the second spliced voice data are determined as the sample audio data.

In the third manner, the voice data acquired by recording based on the first way is determined as base voice data. For a different speaker, at least one piece of the base voice data of the speaker is copied to a set multiple, and at least two identical pieces of voice data (including the copied voice data and the base voice data) are spliced with at least one piece of the voice data other than the voice data of the speaker, and the spliced voice data is determined (noted as the third spliced voice data for description). It will be appreciated that the third spliced voice data includes at least two identical pieces of voice data and at least two different pieces of voice data. Each of the base voice samples and each piece of the third spliced voice data are determined as the sample audio data.

In some possible embodiments, the acquired sample audio data is expanded simultaneously by at least two pieces of the three above-described manners.

Based on determining the sample audio data by the voice data of the speaker acquired by recording, at least two pieces of voice data of the speaker are spliced and the voice data acquired by the splicing process is determined as the sample audio data. In this way, the sample audio data of the speaker is expanded, such that the difficulty and cost of acquiring the sample audio data of the speaker are further reduced. This is conducive to training the tone conversion model based on a large amount of acquired sample audio data, and improving the accuracy and robustness of the acquired tone conversion model.

To acquire a tone conversion model with higher accuracy, it is necessary to supervise the tone conversion effect of the tone conversion model, such that the synthesized audio data output by the tone conversion model is close to the audio data (noted as the target audio data) of the target speaker with the same speaking content. Thus, upon acquisition of each piece of sample audio data in the sample set, for each piece of sample audio data, target audio data corresponding to the sample audio data is determined, and subsequently, based on the target audio data, whether or not the synthesized audio data acquired based on the original tone conversion model as well as the sample audio data is accurate is determined, such that the tone conversion effect of the original tone conversion model is determined.

In some possible embodiments, for each piece of sample audio data in the sample set, target audio data of a different speaker with the same semantic information as the sample audio data is determined. The target audio data includes at least one piece of sample audio data or non-sample audio data. That is, the target audio data includes sample audio data of a different speaker in the sample set having the same semantic information as the sample audio data, and/or, non-sample audio data of a different speaker having the same semantic information as the sample audio data.

In some other possible embodiments, it is contemplated that the process of determining, for each piece of sample audio data in the sample set, the target audio data of a different speaker that has the same semantic information as the sample audio data is costly. Therefore, in some embodiments of the present disclosure, for each piece of sample audio data in the sample set, the sample audio data is determined as the target audio data corresponding to the sample audio data, such that there is no need to expend resources to determine the target audio data that has a different tone from that sample audio data, and thus the difficulty of training the tone conversion model is reduced.

In S102, a first tone feature of any piece of the sample audio data is acquired by a tone extraction network in the original tone conversion model; a first semantic feature is acquired based on the tone feature and a linear spectrum corresponding to the sample audio data by a tone removal network in the original tone conversion model, wherein the first semantic feature is a feature unrelated to a tone of the speaker and related to semantic information in the sample audio data; and synthesized audio data is acquired based on the first semantic feature and a second tone feature of the target audio data corresponding to the sample audio data by a vocoder in the original tone conversion model.

In some embodiments of the present disclosure, the original tone conversion model is preconfigured, and values of parameters in the original tone conversion model are randomly defined or manually preconfigured. In a case where the sample set is acquired based on the above embodiments, the original tone conversion model is trained based on each piece of sample audio data contained in the sample set, such that a trained tone conversion model is acquired.

In the specific implementation, any sample audio data in the sample set is acquired, and the sample audio data is input into the original tone conversion model. By the original tone conversion model, based on the sample audio data and the tone feature (denoted as the second tone feature) of the target audio data corresponding to the sample audio data, the synthesized audio data corresponding to the sample audio data is acquired.

In some embodiments, at least a tone extraction network, a tone removal network, and a vocoder are included in the original tone conversion model to accurately process the input sample audio data by the tone extraction network, the tone removal network, and the vocoder included in the original tone conversion model. The tone extraction network is connected to the tone removal network and the vocoder, and the tone removal network is connected to the vocoder. By the tone extraction network, the first tone feature of the input sample audio data is acquired, such that the tone information in the input sample audio data that is not related to the semantic content is accurately acquired, which is conducive to subsequently acquiring the synthesized audio data based on the first tone feature and improving the accuracy of the tone of the synthesized audio data. By the tone removal network, the first semantic feature, which is not related to the tone of the speaker of the sample audio data but only related to the semantic information of the sample audio data, of the input sample audio data is acquired, which is conducive to subsequently acquiring the synthesized audio data based on the first semantic feature and guaranteeing the accuracy of the speaking content of the synthesized audio data. By the vocoder, the synthesized audio data is acquired based on the first semantic feature and the second tone feature of the target audio data corresponding to this sample audio data.

In the specific implementation, any sample audio data in the sample set is acquired, and the sample audio data is input into the original tone conversion model. By the tone extraction network in the original tone conversion model, the sample audio data is processed accordingly, and the first tone feature corresponding to the sample audio data is acquired. The semantic feature (denoted as the first semantic feature) is acquired based on the first tone feature and the linear spectrum corresponding to the sample audio data by the tone removal network in the original tone conversion model. The synthesized audio data corresponding to the sample audio data is acquired based on the acquired first semantic feature and the second tone feature of the target audio data corresponding to the sample audio data by the vocoder in the original tone conversion model.

The first semantic feature is a feature in the sample audio data that is not related to the tone of the speaker but is related to the speaking content, such that the influence of the tone on the semantic information is avoided, and the accuracy of the acquired semantic information is improved.

It should be noted that the linear spectrum corresponding to the sample audio data is acquired by a predetermined linear spectrum algorithm (e.g., fast Fourier transform algorithm).

In some possible embodiments, prior to inputting any sample audio data in the sample set into the original tone conversion model, an acoustic feature of the sample audio data is acquired. The acoustic feature of the sample audio data is inputted into the original tone conversion model, such that the acoustic feature is processed by the original tone conversion model, and the synthesized audio data is acquired.

The acoustic feature is a Mel Frequency Cepstrum Coefficient (MFCC) of a mel spectrogram, a Bark Frequency Cepstrum Coefficient (BFCC), an Inverse Mel Frequency Cepstrum Coefficient (IMFCC), a Gammatone Frequency Cepstrum Coefficient (GFCC), a Linear Prediction Cepstral Coefficient (LPCCS), or the like.

It should be noted that the acoustic feature is acquired by an acoustic feature extraction algorithm or by an acoustic feature extraction model.

Exemplarily, in the case where the acoustic feature is a Mel frequency spectrum, a Mel frequency spectrum of any sample audio data in the sample set is acquired, and the Mel frequency spectrum of the sample audio data is input into the original tone conversion model. By the tone extraction network in the original tone conversion model, the input Mel spectrum is processed accordingly, and thus the first tone feature of the sample audio data is acquired, such as a 256-dimensional tone feature (tone_vector).

It should be noted that the tone extraction network is determined based on network layers included in a voiceprint model, such as a Deep Speaker RawNet (GE2E).

The tone removal network in the original tone conversion model at least includes a posteriori encoder, such that the feature in the sample audio data that is not related to the tone of the speaker but is related to the semantic information is accurately acquired, which improves the accuracy of the acquired first semantic features and avoids the influence of the tone feature of the sample audio data on the semantic information of the sample audio data. The posterior encoder is connected to an enhancement sub-network. The posterior encoder is configured to acquire a hidden vector related to the speaking content from the sample audio data to determine the first semantic feature of the sample audio data based on the hidden vector.

Specifically, upon acquisition of the first tone feature output by the tone extraction network based on the embodiments described above, the hidden vector of the semantic information in the sample audio data is acquired based on the first tone feature and the linear spectrogram corresponding to the sample audio data by the posteriori encoder included in the tone removal network in the original tone conversion model. Then, based on the hidden vector, the first semantic feature is determined.

The hidden vector is directly determined as the first semantic feature, or the hidden vector is processed by a predetermined mathematical function (e.g., logarithmic function), and the processed hidden vector is determined as the first semantic feature.

In some possible embodiments, the removal tone network in the original tone conversion model further includes an enhancement sub-network (e.g., flow network) to enhance the feature in the sample audio data that is not related to the tone of the speaker but is related to the semantic information and to improve the distributional representation of the semantic information, such that the accuracy of the acquired first semantic feature is further improved, and thus the tone feature of the sample audio data has no influence on the semantic information of the sample audio data. The enhancement sub-network is connected to the posteriori encoder in the tone removal network. The enhancement sub-network is configured to enhance the hidden vector acquired by the posteriori encoder. It should be understood that the enhancement sub-network is configured to extract a feature, which is higher dimensional and more abstract, and is not related to the tone of the speaker and related to the semantic information from the hidden vector acquired by the posteriori encoder,

In the specific implementation, upon acquisition of the first tone feature output by the tone extraction network based on the embodiments described above, the hidden vector of the semantic information in the sample audio data is acquired based on the first tone feature and the linear spectrum corresponding to the sample audio data by the posteriori encoder in the tone removal network in the original tone conversion model. Then, by the enhancement sub-network in the tone removal network in the original tone conversion model, based on the hidden vector, the enhanced hidden vector is acquired. That is, the first semantic feature is determined.

Upon acquisition of the first semantic feature of the input sample audio data based on the above embodiments, the synthesized audio data whose speaking content satisfies the first semantic feature and whose tone satisfies the second tone feature is acquired based on the first semantic feature and the second tone feature of the target audio data corresponding to the sample audio data by the vocoder in the tone conversion model.

The vocoder is a high efficiency (HiFiGAN) vocoder, a linear predictive coding (LPC) vocoder, a World vocoder, or the like, which is flexibly defined according to the actual needs during the specific implementation process, and is not specifically limited herein.

In some possible embodiments, the second tone feature of the target audio data corresponding to the sample audio data is acquired by the tone extraction network in the original tone conversion network.

For example, in a case where the target audio data is the sample audio data, the first tone feature of the sample audio data determined by the tone extraction network in the original tone conversion network is directly determined as the second tone feature.

For example, in a case where the target audio data is not the sample audio data, i.e., the target audio data is sample audio data in the sample set that is different from the speaker of the sample audio data, or non-sample audio data that is different from the speaker of the sample audio data, the target audio data corresponding to the sample audio data is also input into the original tone conversion model when the sample audio data is input into the original tone conversion model. In this way, the second tone feature of the target audio data is acquired by the tone extraction network in the original tone conversion network.

In S103, based on the target audio data and synthesized audio data corresponding to each piece of the sample audio data, a trained tone conversion model is acquired by training the original tone conversion model.

The synthesized audio data corresponding to the sample audio data determined by the tone conversion model with higher accuracy is more similar to the target audio data corresponding to the sample audio data. Therefore, upon acquisition of the synthesized audio data corresponding to each piece of sample audio data based on the above embodiments, the values of the parameters in the original tone conversion model are adjusted based on the target audio data corresponding to each piece of sample audio data and the synthesized audio data corresponding to each piece of sample audio data, such that the trained tone conversion model is acquired. Exemplarily, based on the target audio data corresponding to each piece of sample audio data and the corresponding synthesized audio data, a reconstruction loss value is determined, and based on the reconstruction loss value, the value of the parameter in the original tone conversion model is adjusted, and thus the trained tone conversion model is acquired.

In some possible embodiments, a sub-reconstruction loss value is determined for each piece of sample audio data based on the target audio data corresponding to the sample audio data and the synthesized audio data corresponding to the sample audio data. Based on the sum of all the sub-reconstruction loss values acquired in the current iteration, the reconstruction loss value is determined. Based on the reconstruction loss value, the values of the parameters in the original tone conversion model are adjusted, and thus the trained tone conversion model is acquired.

Exemplarily, the sub-reconstruction loss value is determined according to the target audio data corresponding to the sample audio data and the synthesized audio data corresponding to the sample audio data by the following equation.

$$\mathrm{recon\_loss}_k = ||\mathrm{gen\_audio}_k - \mathrm{target\_audio}_k||_1$$

recon_loss$_k$ represents a sub-construction loss value corresponding to a $k^{th}$ sample audio data, gen$_{audio_k}$ represents synthesized audio data corresponding to a $k^{th}$ sample audio data, target$_{audio_k}$ represents target audio data corresponding to a $k^{th}$ sample audio data, and $||\cdot||_1$ represents a 1-norm operator.

It is considered that the accuracy of the semantic information in the audio data acquired by the tone conversion model also affects the effect of tone conversion. Therefore, in some embodiments of the present disclosure, the accuracy of the semantic features extracted by the tone conversion model is supervised during the training process of the tone conversion model.

In some possible embodiments, the semantic information of each piece of sample audio data in the sample set is labeled in advance, such that the accuracy of the semantic feature extracted by the tone conversion model is supervised based on a difference between the labeled semantic corresponding to each piece of sample audio data and the first semantic feature corresponding to each piece of sample audio data.

In some other possible embodiments, in a case where a tone conversion model with high accuracy is to be acquired, a large amount of sample audio data is required, and labeling each piece of sample audio data brings about a large amount of workload and consumes a large amount of cost, which increases the difficulty of acquiring the tone conversion model. Therefore, in some embodiments of the present disclosure, a semantic extraction network is added to the tone conversion model, such that the semantic information in the audio data is adversarially learned by the semantic extraction network against the tone removal network in the tone conversion model. In the process of training the original tone conversion model, for any sample audio data in the sample set, the semantic feature (noted as the second semantic feature) in the sample audio data is acquired based on the input sample audio data by the semantic extraction network in that original tone conversion model. The second semantic feature is also a feature in the sample audio data that is not related to the tone of the speaker but is related to the semantic information.

In some embodiments, the semantic extraction network includes a first content sub-network, a second content sub-network, and a third content sub-network, such that the semantic information in the sample audio data with the tone information removed is accurately acquired. The first content sub-network is connected to the second content sub-network and is configured to process the sample audio data to acquire a denser content feature in the sample audio data, and the first content sub-network is an h-net network or the like. The second content sub-network is connected to a third content sub-network and is configured to process the content feature output from the first content sub-network to acquire a discretized content feature and remove non-essential details of the content feature, such that the discretized content feature is relevant to the semantic information of the sample audio data. For example, the second content sub-network is a vector quantization (VQ) network, or the like. The third content sub-network is configured to process the discretized content feature output from the second content sub-network and to motivate the discretized content feature to learn a local feature in the sample audio data that is related to the semantic information, such that the second semantic feature of the sample audio data is acquired. For example, the third content sub-network is a g-network or a recurrent neural network (RNN)-based contrastive predictive coding (CPC) network.

In the specific implementation process, upon input of any of the sample audio data into the original tone conversion model based on the above embodiments, the content feature is acquired based on the sample audio data by the first content sub-network in the semantic extraction network in the original tone conversion model; the discrete content feature is acquired based on the content feature by the second content sub-network in the semantic extraction network; and the second semantic feature of the sample audio data is acquired based on the discretized content feature by the third content sub-network in the semantic extraction network.

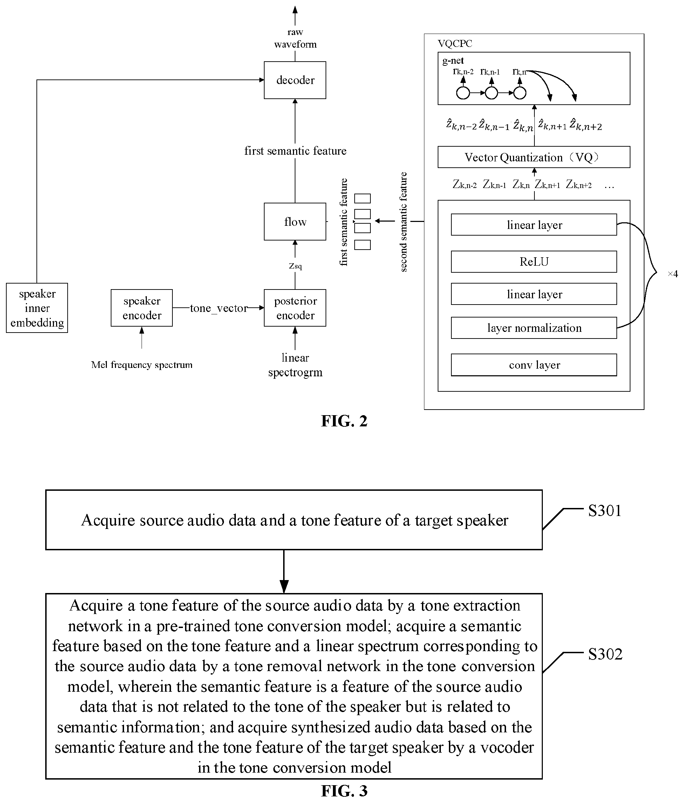

FIG. 2 is a schematic structural diagram of a tone conversion model according to some embodiments of the present disclosure. A method for training a tone conversion model according to some embodiments of the present disclosure is described hereinafter in connection with FIG. 2.

The Mel frequency spectrum of any sample audio data in the sample set is acquired, and the Mel frequency spectrum of the sample audio data is input into the original tone conversion model. The Mel spectrum of the sample audio data is processed by the tone extraction network (speaker encoder) in the original tone conversion model, such that the first tone feature (tone_vector) corresponding to the sample audio data is acquired. By the posterior encoder in the tone removal network in the original tone conversion model, the hidden vector ($z_{sq}$) of the semantic information in the sample audio data is acquired based on the first tone feature and the linear spectrogram corresponding to the sample audio data. Based on the hidden vector, the enhanced hidden vector is acquired by the enhancement sub-network (flow) in the tone removal network in the original tone conversion model. That is, the first semantic feature is determined. At the same time, by the semantic extraction network (VQCPC net) in the original tone conversion model, based on the input sample audio data, the second semantic feature in this sample audio data is acquired. Then, by the decoder shown in FIG. 2, the synthesized audio data (raw waveform) is acquired based on the first semantic feature and the second tone feature (speaker inner embedding) of the target audio data corresponding to the sample audio data.

Specifically, the process of acquiring the second semantic feature in the sample audio data based on the input sample audio data by the semantic extraction network in the original tone conversion model includes the following. A content feature Z is acquired based on the Mel spectrum of the sample audio data by the first content sub-network (h-net) in the semantic extraction network in the original tone conversion model. As shown in FIG. 2, the content feature Z of the $k^{th}$ sample audio data includes the content data of each audio frame included in the $k^{th}$ sample audio data. For example, the content data of the $n^{th}$ audio frame included in the $k^{th}$ sample audio data is $z_{k,n}$. A discretized content feature $\hat{Z}$ is acquired based on the content feature Z by the second content sub-network (Vector Quantization, VQ) in the semantic extraction network. As shown in FIG. 2, the discretized content feature $\hat{Z}$ of the $k^{th}$ sample audio data includes the discretized content data of each audio frame included in the $k^{th}$ sample audio data. For example, the discretized content data of the $n^{th}$ audio frame included in the $k^{th}$ sample audio data is $\hat{Z}_{k,n-1}$. The second semantic feature R of the sample audio data is acquired by the third content sub-network (g-net) in the semantic extraction network based on the discretized content feature $\hat{Z}$. As shown in FIG. 2, the second semantic feature R of the $k^{th}$ sample audio data includes the second semantic feature of each audio frame included in the $k^{th}$ sample audio data. For example, the discretized content data of the $n^{th}$ audio frame in the $k^{th}$ sample audio data is $r_{k,n}$.

It should be noted that the h-network includes a convolutional layer, a specification layer, a linear transformation layer, and a logistic function layer. The convolutional layer included in the h-network shown in FIG. 2 is successively connected to four sub-networks of the same connection structure, and for any sub-network, the sub-network includes one normalization layer, two linear transformation layers, and one logic function (ReLU) layer.

Upon acquisition of the second semantic feature of each piece of sample audio data based on the above embodiments, the trained tone conversion model is acquired by training the original tone conversion model based on the target audio data corresponding to each piece of sample audio data and the synthesized audio data corresponding to each piece of sample audio data, and the first semantic feature corresponding to each piece of sample audio data and the second semantic feature corresponding to each piece of sample audio data. That is, based on a difference between the target audio data and synthesized audio data corresponding to each piece of sample audio data, and a difference between the first semantic feature and the second semantic feature corresponding to each piece of sample audio data, the values of the parameters in the original tone conversion model are adjusted to acquire the trained tone conversion model, such that the unsupervised training of the ability of the tone conversion model to extract semantic information is achieved.

In the specific implementation process, a reconstruction loss value is determined based on the target audio data corresponding to each piece of sample audio data and the synthesized audio data corresponding to each piece of sample audio data; and a semantic loss value is determined based on the first semantic feature corresponding to each piece of sample audio data and the second semantic feature corresponding to each piece of sample audio data. Based on the reconstruction loss value and the semantic loss value, a composite loss value is determined. Based on the composite loss value, the values of the parameters in the original tone conversion model are adjusted, such that the trained tone conversion model is acquired.

Exemplarily, for each piece of sample audio data in the sample set, a sub-reconstruction loss value is determined based on a difference between the target audio data and the synthesized audio data corresponding to the sample audio data, and a sub-semantic loss value is determined based on a difference between a first semantic feature and a second semantic feature corresponding to the sample audio data. The reconstruction loss value is determined based on the sum of all reconstruction loss values determined by the current iteration; and the semantic loss value is determined based on the sum of all sub-semantic loss values determined by the current iteration. Based on the reconstruction loss value and the semantic loss value, the composite loss value is determined. Based on the composite loss value, the values of the parameters in the original tone conversion model are adjusted, such that the trained tone conversion model is acquired.

In some embodiments, in determining the composite loss value based on the reconstruction loss value and the semantic loss value, the composite loss value is determined based on the reconstruction loss value and its corresponding first weight value, and the semantic loss value and its corresponding second weight value. For example, a product (noted as a first product) of the reconstruction loss value and the corresponding first weight value is acquired, and a product (noted as the second product) of the semantic loss value and the corresponding second weight value is acquired. Based on the sum of the first product and the second product, the composite loss value is determined.

In some possible embodiments, while the hidden vector is acquired by the posteriori encoder included in the tone removal network in the original tone conversion model based on the linear spectrum corresponding to the sample audio data and the first tone feature determined by the tone extraction network in the original tone conversion model, a mean vector and a variance vector of the hidden vector are also acquired. That is, by the posteriori encoder included in the tone removal network in the original tone conversion model, based on the linear spectrum corresponding to the sample audio data and the first tone feature determined by the tone extraction network in the original tone conversion model, it is also possible to acquire the mean value vector and the variance vector of the hidden vector. When subsequently determining the semantic loss value based on the first semantic feature corresponding to each piece of sample audio data and the second semantic feature corresponding to each piece of sample audio data, the semantic loss value is determined based on the first semantic feature, the second semantic feature, the mean value vector, and the variance vector that are corresponding to each piece of sample audio data. That is, a sub-semantic loss value is determined for each piece of sample audio data based on the first semantic feature, the second semantic feature, the mean vector, and the variance vector of the sample audio data. The semantic loss value is determined based on the sum of all sub-semantic loss values determined by the current iteration.

Exemplarily, the sub-semantic loss value is determined based on the first semantic feature, the second semantic feature, the mean vector, and the variance vector of the sample audio data by the following equation.

$$\text{KL\_loss}_k = \log_{sq_k} - \log_{sp_k} - 0.5 + 0.5 * (z_{p_k} - m_{p_k}) ** 2 + \exp(-2 * \log_{sp_k})$$

KL_loss represents a sub-semantic loss value corresponding to the $k^{th}$ sample audio data, $\log_{sq_k}$ represents a log value of a variance vector of a hidden vector corresponding to the $k^{th}$ sample audio data, $\log_{sp_k}$ represents a log value of a variance vector of a second semantic feature of the $k^{th}$ sample audio data, $z_{p_k}$ represents a first semantic feature of the $k^{th}$ sample audio data, and $m_{p_k}$ represents a mean vector of a hidden vector corresponding to the $k^{th}$ sample audio data.

In some possible embodiments, in a case where the semantic extraction network in the original tone conversion model includes the first content sub-network, the second content sub-network, and the third content sub-network, the existence of a loss value in the semantic extraction network also needs to be considered in the process of training the original tone conversion model. Therefore, in some embodiments of the present disclosure, a quantization loss value is determined based on the content feature corresponding to each piece of sample audio data and the discretized content feature corresponding to each piece of sample audio data, and a contrast learning loss value is determined based on the discretized content feature corresponding to each piece of sample audio data and the second semantic feature corresponding to each piece of sample audio data, such that it is conducive to subsequently adjusting the values of the parameters in the original tone conversion model based on the target audio data corresponding to each piece of sample audio data and the synthesized audio data corresponding to each piece of sample audio data, the first semantic feature corresponding to each piece of sample audio data and the second semantic feature corresponding to each piece of sample audio data, the quantization loss value and the contrast learning loss value, such that the trained tone conversion model is acquired.

In some embodiments, in determining the quantization loss value, for each piece of sample audio data, a sub-quantization loss value corresponding to the sample audio data is determined based on the content feature and the discretized content feature corresponding to each piece of audio frame contained in the sample audio data. The quantization loss value is determined based on the sum of all the sub-quantization loss values determined by the current iteration.

For example, the quantization loss value is determined based on the content feature corresponding to each piece of sample audio data and the discretized content feature corresponding to each piece of sample audio data by the following equation.

$$\text{VQ\_loss} = \frac{1}{KT} \sum_{k=1}^{K} \sum_{n=1}^{N/2} \left\| z_{k,n} - sg(\hat{z}_{k,n}) \right\|_2^2$$

VQ_loss represents the quantization loss value, K represents the total number of sample audio data contained in the sample set, N represents the total number of audio frames contained in each piece of sample audio data, n represents the $n^{th}$ audio frame contained in the current $k^{th}$ sample audio data, $z_{k,n}$ represents a content feature corresponding to the $n^{th}$ audio frame contained in the $k^{th}$ sample audio data, $\hat{z}_{k,n}$ represents a discretized content feature corresponding to the $n^{th}$ audio frame contained in the $k^{th}$ sample audio data, sg(.) represents a stopping gradient operator, and $\|\cdot\|_2$ represents a 2-norm operator.

In some embodiments, in determining the adversarial learning loss value, for each piece of sample audio data, a sub-contrast learning loss value corresponding to the sample audio data is determined based on the discretized content feature and the second semantic feature corresponding to each piece of audio frame contained in the sample audio data. The contrast learning loss value is determined based on the sum of all sub-contrast learning loss values determined nu the current iteration.

For example, the contrast learning loss value is determined based on the discretized content feature corresponding to each piece of sample audio data and the second semantic feature corresponding to each piece of sample audio data by the following equation.

$$\text{CPC\_loss} = -\frac{1}{KN'M} \sum_{k=1}^{K} \sum_{n=1}^{N'} \sum_{m=1}^{M} \log \left[ \frac{\exp(\hat{z}_{k,n+m}^{T} w_m r_{k,n})}{\sum_{\tilde{z} \in \Omega_{k,n,m}} \exp(\tilde{z}^{T} w_m r_{k,n})} \right]$$

CPC_loss represents the contrast learning loss value. K represents the total number of sample audio data contained in the sample set. $N' = \frac{N}{2} - M$, N represents the number of audio frames contained in each piece of sample audio data separately, and M represents the total number of positive sample audio frames contained in any sample audio data. n represents the $n^{th}$ audio frame in the current $k^{th}$ sample audio data. $\hat{z}_{k,n+m}$ represents a discretized content feature corresponding to the $(n+m)^{th}$ audio frame in the $k^{th}$ sample audio data. $w_m$ represents a weight matrix corresponding to several associated frames of m. $r_{k,n}$ represents a second semantic feature corresponding to the $n^{th}$ audio frame contained in the $k^{th}$ sample audio data. T represents a transpose character. $\check{z}$ represents any negative sample audio frame contained in the $k^{th}$ sample audio data except for the positive sample audio frame. $\Omega_{k,n,m}$ represents a set containing the negative sample audio frames contained in the $k^{th}$ sample audio data.

In the specific implementation, in training the original tone conversion model, for each piece of sample audio data, the sub-reconstruction loss value is determined based on the difference between the target audio data corresponding to the sample audio data and the corresponding synthesized audio data; the sub-semantic loss value is determined based on the difference between the first semantic feature and the second semantic feature of the sample audio data; the sub-quantization loss value is determined based on the content feature and discretized content feature corresponding to each piece of audio frame contained in the sample audio data; and the sub-contrast learning loss value is determined based on the discretized content feature and the second semantic feature corresponding to each piece of audio frame contained in the sample audio data. The reconstruction loss value is determined based on the sum of all the sub-reconstruction loss values determined in the current iteration; the semantic loss value is determined based on the sum of all the sub-semantic loss values determined in the current iteration; the contrast learning loss value is determined based on the sum of all the sub contrast learning loss values determined in the current iteration; and the quantization loss value is determined based on the sum of all the sub quantization loss values determined in the current iteration. Based on the determined reconstruction loss value, the determined semantic loss value, the determined contrast learning loss value, and the determined quantization loss value, the composite loss value is determined. Based on the composite loss value, the values of the parameters in the original tone conversion model are adjusted, such that the trained tone conversion model is acquired.

Exemplarily, the composite loss value is determined based on the determined reconstruction loss value and its corresponding first weight value, the semantic loss value and its corresponding second weight value, the contrast learning loss value and its corresponding third weight value, and the quantization loss value and its corresponding fourth weight value.

It is considered that the tone conversion effect of the synthesized audio data is also affected by the accuracy of the vocoder. Therefore, in some embodiments of the present disclosure, in the process of training the original tone conversion model, a possible loss value in the vocoder in the original tone conversion model is also considered to train the tone conversion model based on the loss value of the vocoder. That is, in the process of training the original tone conversion model, the original tone conversion model is trained based on the target audio data and synthesized audio data corresponding to each piece of sample audio data as well as the loss value of the vocoder in the original tone conversion model, such that the trained tone conversion model is acquired.

Exemplarily, the vocoder is a HiFiGAN vocoder, which is a deep neural network model that employs an end-to-end forward network structure to train a multi-scale discriminator that enables efficient and high-quality speech synthesis. The HiFiGAN vocoder includes a generator and a discriminator, which has two types of discriminators, a multi-scale discriminator and a multi-cycle discriminator to separately characterize audio data generated by the generator in the HiFiGAN vocoder from two different perspectives. The HiFiGAN vocoder uses a feature matching loss as an additional loss for training the generator, and stabilizes the GAN by extracting each intermediate feature of the discriminator and calculating a distance L1 between the target audio data and the synthesized audio data in each feature space. Thus, the loss value of the HiFiGAN vocoder includes the feature-matching loss value, and the original tone conversion model is trained based on the feature-matching loss value.

Exemplarily, the feature-matching loss value is determined by the following equation.

$$L_{FM}(G;D) = E_{x,s}\left[\sum_{j=1}^{J} \frac{1}{Q_j} \left\| D^j(x) - D^i(G(s)) \right\|_1\right]$$

J represents the number of layers of extraction feature layers in the discriminator included in the vocoder, $D^j()$ represents a feature extracted by the $j^{th}$ extraction feature layer in the discriminator, $Q_j$ represents the number of features extracted by the $j^{th}$ extraction feature layer in the discriminator, x represents the target audio data, and s represents the Mel spectrum of the synthesized audio data generated by the generator.

The HiFiGAN vocoder is still a generative adversarial network in nature, the discriminator in the HiFiGAN vocoder calculates the probability that the synthesized audio data is the target audio data, and the generator in the HiFiGAN vocoder is configured to synthesize the synthesized audio data. In the process of training the HiFiGAN vocoder, it is expected that the generator in the HiFiGAN vocoder is capable of synthesizing synthesized audio data that is close to the target audio data, such that the discriminator in the HiFiGAN vocoder fails to determine whether the audio data is the target audio data or the synthesized audio data. Based on this, the loss value of the HiFiGAN vocoder further includes a generative adversarial loss value. For example, the generative adversarial loss value is determined based on the target audio data and the Mel spectrum of the synthesized audio data generated by the generator in the HiFiGAN vocoder.

Exemplarily, the adversarial loss value is generated by the following equations.

$$L_{adv}(D;G) = E_{x,s}\left[(D(x) - 1)^2 + D\big(G(s)\big)^2\right]$$

$$L_{adv}(G;D) = E_s\left[\big(D\big(G(s)\big) - 1\big)^2\right]$$

$L_{adv}(D;G)$ represents a generative adversarial loss value of the discriminator in the HiFiGAN vocoder, $L_{adv}(D;G)$ represents a generative adversarial loss value of the generator in the HiFiGAN vocoder, x represents the target audio data, and s represents the Mel spectrum of the synthesized audio data generated by the generator.

Upon acquisition of the loss value of the vocoder based on the above embodiments, the value of each parameter in the original tone conversion model is adjusted based on the loss value of the vocoder, the target audio data and synthesized audio data corresponding to each piece of sample audio data, such that the trained tone conversion model is acquired.

For example, based on the target audio data and synthesized audio data corresponding to each piece of sample audio data, the reconstruction loss value is determined, and the loss value of the vocoder in the original tone conversion model is determined. Based on the reconstruction loss value and the loss value of the vocoder, the composite loss value is determined. Based on the composite loss value, the value of each parameter in the original tone conversion model is adjusted.

In determining the composite loss value based on the reconstruction loss value and the loss value of the vocoder, the composite loss value is determined based on the reconstruction loss value and its corresponding first weight value, and the loss value of the vocoder and its corresponding fifth loss value.

For example, the reconstruction loss value is determined based on the target audio data and synthesized audio data corresponding to each piece of sample audio data; the semantic loss value is determined based on the first semantic feature corresponding to each piece of sample audio data and the second semantic feature corresponding to each piece of sample audio data; the quantization loss value is determined based on the content feature corresponding to each piece of sample audio data and the discretized content feature corresponding to each piece of sample audio data; the contrast learning loss value is determined based on the discretized content feature corresponding to each piece of sample audio data and the second semantic feature corresponding to each piece of sample audio data; and the loss value of the vocoder in the original tone conversion model is determined. Based on the reconstruction loss value, the semantic loss value, the quantization loss value, the contrast learning loss value, and the loss value of the vocoder, the composite loss value is determined. Based on the composite loss value, the value of each parameter in this original tone conversion model is adjusted.

Exemplarily, the composite loss value is determined based on the reconfiguration loss value, the semantic loss value, the quantization loss value, the contrast learning loss value, and the loss value of the vocoder by the following equation.

$$\text{total\_loss} = \text{recon\_loss} + \text{KL\_loss} + \text{vq\_loss} + \text{cpc\_loss} + \text{decoder\_loss}$$

total_loss represents the composite loss value, recon_loss represents the reconstruction loss value, KL_loss represents the semantic loss value, vq_loss represents the quantization loss value, cpc_loss represents the contrast learning loss value, and decoder_loss represents the loss value of the vocoder.

It should be noted that in a case where the vocoder is a HiFiGAN vocoder, the decoder_loss includes a feature-matching loss value (fm_loss) and a generative adversarial loss value (adv_loss).

Since several pieces of sample audio data configured to train the original tone conversion model are included, for each piece of sample audio data, the steps described above are performed until a predetermined convergence condition is satisfied.

Satisfying the predetermined convergence conditions means that an integrated loss value determined by the current iteration is less than a predetermined loss threshold, or the number of iterations for training the original tone conversion model reaches a predetermined maximum number of iterations. The specific implementation is defined flexibly and is not specifically limited herein.

In some possible embodiments, in training the original tone conversion model, the sample audio data is divided into a training sample and a test sample. The original tone conversion model is first trained based on the training sample, and then the reliability of the above-trained tone conversion model is verified based on the test sample.

Upon acquisition of the trained tone conversion model, based on the tone conversion model and each piece of sample audio data in the sample set, a tone feature corresponding to each speaker in the sample set is determined. The tone feature corresponding to each of the speakers and an object identifier corresponding to each of the speakers are then saved, such that when synthesizing the synthesized audio data of any speaker in the sample set by the trained tone conversion model, the tone feature of the object identifier of the speaker is determined directly based on the correspondence between the object identifier and the tone feature, which is conducive to acquiring the tone feature of the speaker based on the tone feature and the tone conversion model and improving the efficiency of the tone conversion. It should be understood that the tone of the speaker of any sample audio data in the sample set is a tone supported by the trained tone conversion model.

Embodiment 2:

Some embodiments of the present disclosure also provide a method for tone conversion. FIG. 3 is a schematic diagram of a tone conversion process according to some embodiments of the present disclosure. The process includes the following steps.

In S301, source audio data and a tone feature of a target speaker are acquired.

The method for tone conversion according to the embodiments of the present disclosure is applicable to an electronic device, which is an intelligent device such as a robot or a server. The electronic device for performing the tone conversion in the embodiments of the present disclosure is the same as or different from the electronic device for training the tone conversion model as described above.

In some possible embodiments, since the tone conversion model is trained in an offline manner, the tone conversion model is deployed to the electronic device for performing the tone conversion when the trained tone conversion model is acquired, such that the electronic device for performing the tone conversion performs the tone conversion by the tone conversion model.

It should be noted that the specific process of training the tone conversion model has been described in the above embodiments, which is not repeated herein.

In some possible embodiments, in a case where the trained tone conversion model includes a semantic extraction network, since the semantic extraction network is mainly used to supervise a semantic feature extracted by a tone removal network, other networks in the tone conversion model other than the semantic extraction network are deployed to the electronic device that performs the tone conversion when the trained tone conversion model is deployed to the electronic device that performs the tone conversion, the number of parameters included in the tone conversion model is reduced, and the cost of data transmission and the pressure on the memory space of the electronic device for tone conversion are reduced.

In a case where tone conversion is required, the user inputs a synthesis request on an intelligent device, such that the intelligent device is controlled by the synthesis request to synthesize audio data of a certain speaking content from the target speaker. There are many specific ways of inputting the synthesis request. For example, the synthesis request is input by inputting voice information or by operating a virtual button displayed on a display screen of the intelligent device, which is flexibly set according to the needs of the specific implementation process and is not specifically limited herein. Upon acquisition of the synthesis request, the intelligent device transmits the synthesis request, the source audio data, and information of the target speaker to the electronic device that performs the tone conversion.

The target speaker refers to a speaker to which the tone of the synthesized audio data acquired by the tone conversion technique belongs, and the information of the target speaker includes an object identifier of the target speaker or audio data of the target speaker. The source audio data refers to audio data configured to provide semantic information and not provide tone information.

It should be noted that both the source audio data and the audio data of the target speaker are recorded by the user via a smart device, or audio data preconfigured in the smart device.

In some possible application scenarios, in a case where the user identifies a speaker of any of the sample audio data in the sample set as the target speaker, the information of the target speaker includes an object identifier of the target speaker. For example, the intelligent device outputs a plurality of object identifiers of the speakers, and the user selects the plurality of object identifiers output by the intelligent device. In a case where the intelligent device detects the object identifier selected by the user, the selected object identifier is determined as the information of the target speaker. Subsequently, the intelligent device transmits the synthesis request, the object identifier of the target speakers, and the source audio data to the electronic device performing the tone conversion.

The object identifier is expressed in the form of a number, a character string, or other forms, as long as the form is capable of uniquely identifying the speaker.

It should be appreciated that the sample audio data in the sample set is configured to train the tone conversion model. It should be understood that the tone of the speaker of any sample audio data in the sample set is a tone supported by the trained tone conversion model.

In some other possible application scenarios, in a case where the user identifies other speakers outside the sample set as the target speaker, i.e., does not identify the speaker of any sample audio data in the sample set as the target speaker, the information of the target speaker includes the audio data of the target speaker. For example, in a case where the intelligent device outputs object identifiers of a plurality of speakers and the intelligent device does not detect the object identifier selected by the user or detects a trigger operation input by the user to add the target speaker, the user is prompted to input the audio data of the target speaker, and the audio data input by the user is determined as the information of the target speaker. Subsequently, the smart device transmits the synthesis request, the audio data of the target speaker, and the source audio data to the electronic device performing the tone conversion.

Upon receiving the synthesis request, the information of the target speaker, and the source audio data, the electronic device performing the tone conversion determines a tone feature of the target speaker based on the information of the target speaker. Subsequently, based on the tone feature of the target speaker and the source audio data, audio data of the speaking content of the source audio data of the target speaker is acquired. That is, synthesized audio data of the target speaker is acquired.

In some possible embodiments, acquiring the tone feature of the target speaker includes:

acquiring the information about the target speaker; and
determining the tone feature corresponding to the object identifier of the target speaker based on a correspondence between the saved object identifier and the tone feature in response to determining that the information of the target speaker is the object identifier; or
acquiring the tone feature of the audio data by the tone extraction network in the tone conversion model in response to determining that the information of the target speaker is the audio data.

In some embodiments of the present disclosure, determining the tone feature of the target speaker based on the information of the target speaker includes the following two situations.

In the first situation, in a case where the information of the target speaker is the object identifier of the target speaker, the target speaker is a speaker of any sample audio data in the sample set, then based on the correspondence between the saved object identifier and the tone feature, the tone feature corresponding to the object identifier of the target speaker is determined, and the determined tone feature is determined to be the tone feature of the target speaker.

The tone conversion model is acquired by training based on the sample audio data in the sample set.

In the second situation, in a case where the information of the target speaker is the audio data, it is not possible to determine whether the target speaker is a speaker of any sample audio data in the sample set, the tone feature of the audio data is acquired by the tone extraction network in the tone conversion model, and the acquired tone feature is determined as the tone feature of the target speaker.

In S302, a tone feature of the source audio data is acquired by a tone extraction network in a pre-trained tone conversion model; a semantic feature is acquired based on the tone feature and a linear spectrum corresponding to the source audio data by a tone removal network in the tone conversion model, wherein the semantic feature is a feature of the source audio data that is not related to the tone of the speaker but is related to semantic information; and synthesized audio data is acquired based on the semantic feature and the tone feature of the target speaker by a vocoder in the tone conversion model.

Upon acquisition of the source audio data and the tone feature of the target speaker based on the above embodiments, the source audio data and the tone feature of the target speaker are input into the pre-trained tone conversion model, such that the synthesized audio data is determined based on the source audio data and the tone feature of the target speaker by the tone conversion model.

In the specific implementation, the tone feature of the source audio data is acquired by the tone extraction network in the pre-trained tone conversion model, the semantic feature is acquired by the tone removal network in the tone conversion model based on the tone feature and the linear spectrum corresponding to the source audio data, wherein the semantic feature is a feature in the source audio data that is not related to the tone of the speaker but is related to the semantic information, and the synthesized audio data is acquired by the vocoder in the tone conversion model based on the semantic feature and the tone feature of the target speaker.

The process of acquiring the linear spectrum corresponding to the source audio data has been described in the above embodiments and is not specifically limited herein.

In some possible embodiments, prior to inputting the source audio data into the pre-trained tone conversion model, a Mel inverted spectrum of the source audio data is acquired, and the Mel inverted spectrum is input into the tone conversion model instead of the source audio data, such that the amount of computation required by the tone conversion model is acquired, and thus the efficiency of the tone conversion is improved, and it is convenient for the tone conversion model to perform the tone conversion.

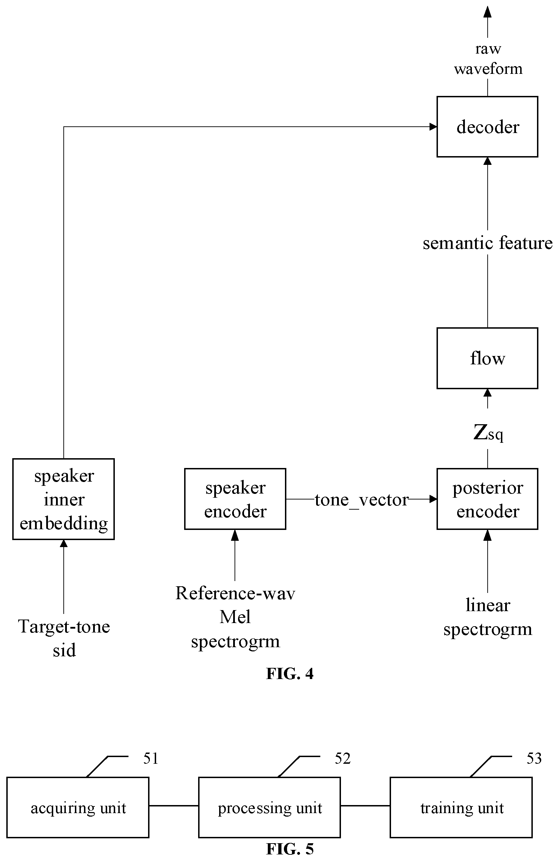

FIG. 4 is a schematic structural diagram of a tone conversion model according to some embodiments of the present disclosure. A method for tone conversion according to some embodiments of the present disclosure is described hereinafter in conjunction with FIG. 4.

First, source audio data and information of a target speaker are acquired.

In a case where the information of the target speaker is an object identifier of the target speaker, the target speaker is a speaker of any sample audio data in the sample set, and it is desired to acquire audio data of the speaking content of any sample audio data made by the target speaker, then, based on a correspondence between the saved object identifier and the tone feature, a tone feature corresponding to the object identifier of the target speaker is determined, and the determined tone feature is determined as the tone feature of the target speaker. With such information about the target speaker, the method for tone conversion of any-to-many is subsequently realized. That is, the tone feature of the speaker of any sample audio data in the sample set is selected, and by the pre-trained tone conversion model, based on the tone feature and the source audio data of any speaking content, the audio data of the speaking content made by the speaker is acquired.

In a case where the information of the target speaker is the audio data, it is not possible to determine whether the target speaker is a speaker of any sample audio data in the sample set, and it is currently desired to acquire audio data of the speaking content of any audio data made by the target speaker, then, the tone feature of the audio data is acquired by the tone extraction network in the tone conversion model, and the acquired tone feature is determined as the tone feature of the target speaker. With the information of the target speaker, a many-to-many method for tone conversion is subsequently implemented. That is, by the pre-trained tone conversion model, based on the tone feature of any audio data and the source audio data of any speaking content, the synthesized audio data that satisfies the tone feature and the speaking content is acquired.

The source audio data (Reference-wav) and the tone feature of the target speaker are input to the pre-trained tone conversion model.

A Mel spectrogram of the source audio data is processed accordingly by the tone extraction network (the speaker encoder shown in FIG. 4) in the tone conversion model, such that the tone feature corresponding to the source audio data is acquired, such as the tone_vector shown in FIG. 4.

By a posteriori encoder included in the tone network in the tone conversion model, such as the posterior encoder shown in FIG. 4, a hidden vector (such as $z_{sq}$) of semantic information in the source audio data is acquired based on the tone feature corresponding to the source audio data and a linear spectrogram (such as the linear spectrogram shown in FIG. 4) corresponding to the source audio data.

An enhancement hidden vector is acquired based on the hidden vector by an enhancement sub-network (flow) included in the tone removal network in the tone conversion model. That is, the semantic feature is determined.

The synthesized audio data is acquired by the vocoder (decoder) shown in FIG. 4 based on that semantic feature and the tone feature of the target speaker (such as the speaker inner embedding shown in FIG. 4). That is, the original waveform shown in FIG. 4 is acquired.

Embodiment 3

Some embodiments of the present disclosure provide an apparatus for training a tone conversion model. FIG. 5 is a schematic structural diagram of an apparatus for training a tone conversion model according to some embodiments of the present disclosure. The structure includes:

an acquiring unit 51, configured to acquire a sample set, wherein the sample set contains sample audio data of different speakers, each piece of the sample audio data corresponds to a piece of target audio data, and the target audio data and the sample audio data have the same semantic information;
a processing unit 52, configured to acquire a first tone feature of any piece of the sample audio data by a tone extraction network in an original tone conversion model; acquire a first semantic feature based on the first tone feature and a linear spectrum corresponding to the sample audio data by a tone removal network in the original tone conversion model, wherein the first semantic feature is a feature in the sample audio data that is not related to a tone of the speaker but is related to the semantic information; and acquire synthesized audio data based on the first semantic feature and a second tone feature of the target audio data corresponding to the sample audio data by a vocoder in the original tone conversion model; and
a training unit 53, configured to acquire a trained tone conversion model by training the original tone conversion model based on the target audio data and synthesized audio data corresponding to each piece of sample audio data.

Since the principle of problem solving of the apparatus for training the tone conversion model described above is similar to that of the method for training the tone conversion model, the implementation and the corresponding beneficial effects of the apparatus for training the tone conversion model described above may be referred to the implementation and beneficial effects of the method, which are not repeated herein.

Embodiment 4.

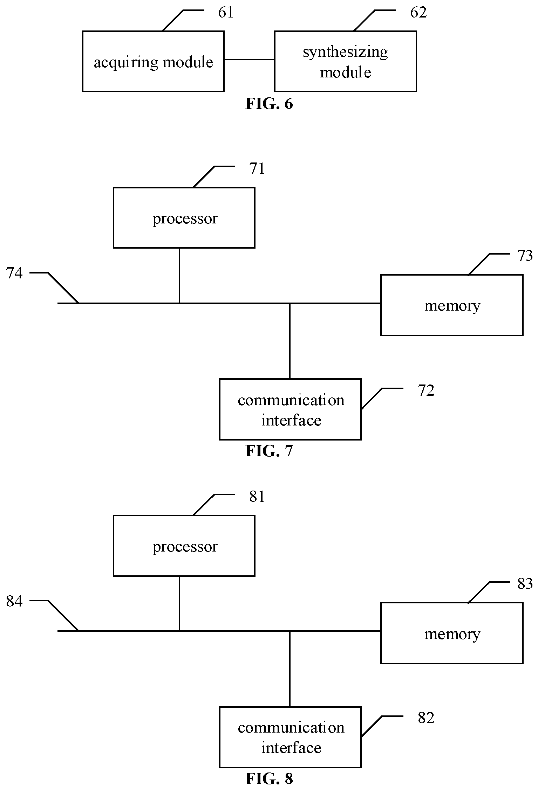

Some embodiments of the present disclosure provide an apparatus for tone conversion. FIG. 6 is a schematic structural diagram of an apparatus for tone conversion according to some embodiments of the present disclosure. The apparatus includes:

> an acquiring module 61, configured to acquire source audio data and a tone feature of a target speaker; and
> a synthesizing module 62, configured to: acquire a tone feature of the source audio data by a tone extraction network in a pre-trained tone conversion model; acquire a semantic feature based on the tone feature and a linear spectrum corresponding to the source audio data by a tone removal network in the tone conversion model, wherein the semantic feature is a feature in the source audio data that is not related to a tone of a speaker but is related to semantic information; and acquire synthesized audio data based on the semantic feature and the tone feature of the target speaker by a vocoder in the tone conversion model.

Since the principle of problem solving of the apparatus for tone conversion described above is similar to that of the method for tone conversion, the implementation of the apparatus for tone conversion described above may be referred to the implementation of the method, which is not repeated herein.

Embodiment 5

FIG. 7 is a schematic structural diagram of an electronic device according to some embodiment of the present disclosure. The electronic device includes a processor 71, a communication interface 72, a memory 73, and a communication bus 74. The processor 71, the communication interface 72, and the memory 73 complete communication with each other by the communication bus 74.

At least one computer program is stored in the memory 73. The at least one program, when loaded and run by the processor 71, causes the processor 71 to perform steps of:

> acquiring a sample set, wherein the sample set contains sample audio data of different speakers, each piece of the sample audio data corresponding to a piece of target audio data, the target audio data and the sample audio data having the same semantic information;
> acquiring, a first tone feature of any piece of the sample audio data by a tone extraction network in an original tone conversion model; acquiring a first semantic feature based on the first tone feature and a linear spectrum corresponding to the sample audio data by a tone removal network in the original tone conversion model, wherein the first semantic feature is a feature in the sample audio data that is not related to a tone of the speaker but is related to the semantic information; and acquiring synthesized audio data based on the first semantic feature and a second tone feature of the target audio data corresponding to the sample audio data by a vocoder in the original tone conversion model; and
> acquiring a trained tone conversion model by training the original tone conversion model based on the target audio data and synthesized audio data corresponding to each piece of the sample audio data.

Since the principle of problem solving of the above electronic device is similar to that of the method for training the tone conversion model, the implementation and the corresponding beneficial effects of the above electronic device may be referred to Embodiment 1 of the method, which are not repeated herein.

Embodiment 6

FIG. 8 is a schematic structural diagram of a further electronic device according to some embodiments of the present disclosure. The electronic device includes a processor 81, a communication interface 82, a memory 83, and a communication bus 84. The processor 81, the communication interface 82, and the memory 83 complete communication with each other by the communication bus 84.

At least one computer program is stored in the memory 83. The at least one computer program, when loaded and run by the processor 81, causes the processor 81 to perform steps of:

> acquiring source audio data and a tone feature of a target speaker; and
> acquiring a tone feature of the source audio data by a tone extraction network in a pre-trained tone conversion model; acquiring a semantic feature based on the tone feature and a linear spectrum corresponding to the source audio data by a tone removal network in the tone conversion model, wherein the semantic feature is a feature in the source audio data that is not related to a tone of a speaker but is related to semantic information; and acquiring synthesized audio data based on the semantic feature and the tone feature of the target speaker by a vocoder in the tone conversion model.

Since the principle of problem solving of the above electronic device is similar to that of the method for tone conversion, the implementation of the above electronic device may be referred to Embodiment 2 of the method, which is not repeated herein.

The communication bus referred to in the above-described electronic device is, for example, a peripheral component interconnect (PCI) bus or an extended industry standard architecture (EISA) bus. This communication bus is classified as an address bus, a data bus, and a control bus. For ease of representation, the bus is represented in the figure by only one thick line, which does not indicate that there is only one bus or one type of bus. The communication interface 82 is configured for communication between the above-described electronic device and other devices. The memory comprises a random access memory (RAM) or comprises a non-volatile memory (NVM), such as at least one disc memory. Optionally, the memory is at least one storage device located away from the aforementioned processor.

The aforementioned processor may be a general-purpose processor, including a central processor and a network processor (NP); or a digital signal processor (DSP), a special-purpose integrated circuit, a field-programmable gate display, or other programmable logic devices, a discrete gate or a transistor logic device, a discrete hardware component, and the like.

Embodiment 7

Based on each of the above embodiments, some embodiments of the present disclosure further provide a computer-readable storage medium, storing at least one computer program runnable on a processor therein. The at least one computer program, when loaded and run on the processor, causes the processor to perform steps of:

acquiring a sample set, wherein the sample set contains sample audio data of different speakers, each piece of the sample audio data corresponding to a piece of target audio data, the target audio data and the sample audio data having the same semantic information;

acquiring a first tone feature of any piece of the sample audio data by a tone extraction network in an original tone conversion model; acquiring a first semantic feature based on the first tone feature and a linear spectrum corresponding to the sample audio data by a tone removal network in the original tone conversion model, wherein the first semantic feature is a feature in the sample audio data that is not related to a tone of the speaker but is related to the semantic information; and acquiring synthesized audio data based on the first semantic feature and a second tone feature of the target audio data corresponding to the sample audio data by a vocoder in the original tone conversion model; and

acquiring a trained tone conversion model by training the original tone conversion model based on the target audio data and synthesized audio data corresponding to each piece of the sample audio data.

Since the principle of problem solving of the computer-readable storage medium and the beneficial effect acquired accordingly are similar to those of the method for training the tone conversion model described in the above embodiments, the specific implementation may be referred to the implementation of the method for training the tone conversion model.

Embodiment 8

Based on each of the above embodiments, some embodiments of the present disclosure further provide a computer-readable storage medium, storing at least one computer program runnable on a processor therein. The at least one computer program, when loaded and run on the processor, causes the processor to perform steps of:

acquiring source audio data and a tone feature of a target speaker; and

acquiring a tone feature of the source audio data by a tone extraction network in a pre-trained tone conversion model; acquiring a semantic feature based on the tone feature and a linear spectrum corresponding to the source audio data by a tone removal network in the tone conversion model, wherein the semantic feature is a feature in the source audio data that is not related to a tone of a speaker but is related to semantic information; and acquiring synthesized audio data based on the semantic feature and the tone feature of the target speaker by a vocoder in the tone conversion model.

Since the principle of problem solving of the computer-readable storage media is similar to that of the method for tone conversion described in the above embodiments, the specific implementation may be referred to the implementation of the method for tone conversion.

It should be appreciated by those skilled in the art that the embodiments of the present disclosure may be provided as methods, systems, or computer program products. Thus, the present disclosure may take the form of fully hardware embodiments, fully software embodiments, or embodiments combining both software and hardware aspects. Further, the present disclosure may take the form of a computer program product implemented on one or more computer-usable storage media (including, but not limited to, a disk memory, a CD-ROM, an optical memory, and the like) that contain computer-usable program code therein.

Some embodiments of the present disclosure further provide a computer program product, including at least one computer program. The at least one computer program, when run by a processor, causes the processor to perform the steps of the method for training the tone conversion model as described above or the steps of the method for tone conversion as described above.

The present disclosure is described with reference to flowcharts and/or block diagrams of methods, apparatuses (systems), and computer program products according to the present disclosure. It should be understood that each of the processes and/or boxes in the flowchart and/or the block diagram, and the combination of the processes and/or boxes in the flowchart and/or the block diagram, may be implemented by computer program instructions. These computer program instructions may be provided to a processor of a general-purpose computer, a special-purpose computer, an embedded processor, or other programmable data processing devices to produce a machine, such that the instructions executed by the processor of the computer or other programmable data-processing device produce a device for carrying out the functions specified in the one flow or multiple flows of the flowchart and/or the one box or multiple boxes of the box diagram.

These computer program instructions may also be stored in a computer-readable memory capable of directing the computer or other programmable data processing device to operate in a particular manner, such that the instructions stored in the computer-readable memory produce an article of manufacture comprising an instruction device that implements the function specified in the flowchart one process or a plurality of processes and/or the box diagram one box or a plurality of boxes.

These computer program instructions may also be loaded onto a computer or other programmable data processing device such that a series of operational steps are performed on the computer or other programmable device to produce computer-implemented processing, such that the instructions executed on the computer or other programmable device provide instructions for implementing the functions specified in the flowchart one process or a plurality of processes and/or the box diagram one box or a plurality of boxes steps for performing the functions specified in the flowchart one or more processes and/or the box diagram one or more boxes.

**Claims**

1. A method for training a tone conversion model, comprising:

   acquiring (S101) a sample set, wherein the sample set contains sample audio data of different speakers, each piece of the sample audio data corresponding to a piece of target audio data, the target audio data and the sample audio data having same semantic information;
   acquiring (S102) a first tone feature of any piece of the sample audio data sample audio data by a tone extraction network in an original tone conversion model; acquiring a first semantic feature based on the first tone feature and a linear spectrum corresponding to the sample audio data by a tone removal network in the original tone conversion model, wherein the first semantic feature is a feature in the sample audio data that is not related to a tone of the speaker but is related to the semantic information; and acquiring synthesized audio data based on the first semantic feature and a second tone feature of the target audio data corresponding to the sample audio data by a vocoder in the original tone conversion model; and
   acquiring (S103) a trained tone conversion model by training the original tone conversion model based on the target audio data and synthesized audio data corresponding to each piece of the sample audio data.

2. The method according to claim 1, wherein the target audio data corresponding to the sample audio data comprises at least one of: the sample audio data, sample audio data different from the speaker of the sample audio data, or non-sample audio data different from the speaker of the sample audio data.

3. The method according to claim 2, wherein acquiring the second tone feature of the target audio data corresponding to the sample audio data comprises:

determining the first tone feature of the sample audio data as the second tone feature in response to determining that the target audio data is the sample audio data; or

acquiring the second tone feature of the target audio data by the tone extraction network in the original tone conversion model in response to determining that the target audio data is not the sample audio data.

4. The method according to claim 1, wherein acquiring the first semantic feature based on the first tone feature and the linear spectrum corresponding to the sample audio data by the tone removal network in the original tone conversion model comprises:

acquiring a hidden vector of the semantic information in the sample audio data based on the first tone feature and the linear spectrum corresponding to the sample audio data by a posteriori encoder in the tone removal network; and

acquiring the first semantic feature based on the hidden vector by an enhancement sub-network in the tone removal network.

5. The method according to claim 4, further comprising:

acquiring a second semantic feature based on any piece of the sample audio data by a semantic extraction network in the original tone conversion model;

wherein training the original tone conversion model based on the target audio data and synthesized audio data corresponding to each piece of the sample audio data comprises:

acquiring the trained tone conversion model by training the original tone conversion model based on the target audio data corresponding to each piece of the sample audio data, the synthesized audio data corresponding to each piece of the sample audio data, the first semantic feature corresponding to each piece of the sample audio data, and the second semantic feature corresponding to each piece of the sample audio data.

6. The method according to claim 5, wherein acquiring the second semantic feature based on the sample audio data by the semantic extraction network in the original tone conversion model comprises:

acquiring a content feature based on the sample audio data by a first content sub-network in the semantic extraction network;

acquiring a discretized content feature based on the content feature by a second content sub-network in the semantic extraction network; and

acquiring the second semantic feature based on the discretized content feature by a third content sub-network in the semantic extraction network.

7. The method according to claim 5 or 6, wherein training the original tone conversion model based on the target audio data corresponding to each piece of the sample audio data, the synthesized audio data corresponding to each piece of the sample audio data, the first semantic feature corresponding to each piece of the sample audio data, and the second semantic feature corresponding to each piece of the sample audio data comprises:

determining a reconstruction loss value based on the target audio data corresponding to each piece of the sample audio data and the synthesized audio data corresponding to each piece of the sample audio data;

determining a semantic loss value based on the first semantic feature corresponding to each piece of the sample audio data and the second semantic feature corresponding to each piece of the sample audio data;

determining a composite loss value based on the reconstruction loss value and the semantic loss value; and

acquiring the trained tone conversion model by adjusting a parameter value of a parameter in the original tone conversion model based on the composite loss value.

8. The method according to any one of claims 1 to 7, further comprising:

acquiring a mean vector and a variance vector of the hidden vector based on the first tone feature and the linear spectrum corresponding to the sample audio data by the posteriori encoder in the tone removal network;

wherein determining the semantic loss value based on the first semantic feature corresponding to each piece of the sample audio data and the second semantic feature corresponding to each piece of the sample audio data comprises:

determining the semantic loss value based on the first semantic feature, the second semantic feature, the mean vector, and the variance vector that are corresponding to each piece of the sample audio data.

9. The method according to claim 6, wherein training the original tone conversion model based on the target audio data corresponding to each piece of the sample audio data, the synthesized audio data corresponding to each piece of the sample audio data, the first semantic feature corresponding to each piece of the sample audio data, and the second semantic feature corresponding to each piece of the sample audio data comprises:

determining a quantization loss value based on the content feature corresponding to each piece of the sample audio data and the discretized content feature corresponding to each piece of the sample audio data; and
determining a contrast learning loss value based on the discretized content feature corresponding to each piece of the sample audio data and the second semantic feature corresponding to each piece of the sample audio data; and
acquiring the trained tone conversion model by training the original tone conversion model based on the target audio data corresponding to each piece of the sample audio data, the synthesized audio data corresponding to each piece of the sample audio data, the first semantic feature corresponding to each piece of the sample audio data, the second semantic feature corresponding to each piece of the sample audio data, the quantization loss value, and the contrast learning loss value.

10. The method according to any one of claims 1 to 9, wherein upon acquiring the trained tone conversion model, the method further comprises:

determining tone features respectively corresponding to different speakers based on the tone conversion model and each piece of the sample audio data in the sample set; and
correspondingly saving object identifiers and the tone features respectively corresponding to the different speakers.

11. A method for tone conversion, comprising:

acquiring (S301) source audio data and a tone feature of a target speaker; and
acquiring (S302) a tone feature of the source audio data by a tone extraction network in a pre-trained tone conversion model; acquiring a semantic feature based on the tone feature and a linear spectrum corresponding to the source audio data by a tone removal network in the tone conversion model, wherein the semantic feature is a feature in the source audio data that is not related to a tone of a speaker but is related to semantic information; and
acquiring synthesized audio data based on the semantic feature and the tone feature of the target speaker by a vocoder in the tone conversion model.

12. The method according to claim 11, wherein acquiring the tone feature of the target speaker comprises:

acquiring information about the target speaker; and
determining a tone feature corresponding to the object identifier of the target speaker based on a correspondence between the saved object identifier and the tone feature in response to determining that the information of the target speaker is an object identifier; or
acquiring a tone feature of the audio data by the tone extraction network in the tone conversion model in response to determining that the information of the target speaker is audio data.

13. An apparatus for training a tone conversion model, comprising:

an acquiring unit (51), configured to acquire a sample set, wherein the sample set contains sample audio data of different speakers, each piece of the sample audio data corresponding to a piece of target audio data, the target audio data and the sample audio data having same semantic information;
a processing unit (52), configured to: acquire a first tone feature of any piece of the sample audio data by a tone extraction network in an original tone conversion model; acquire a first semantic feature based on the first tone feature and a linear spectrum corresponding to the sample audio data by a tone removal network in the original tone conversion model, wherein the first semantic feature is a feature in the sample audio data that is not related to a tone of the speaker but is related to the semantic information; and acquire synthesized audio data based on the first semantic feature and a second tone feature of target audio data corresponding to the sample audio data by a vocoder in the original tone conversion model; and
a training unit (53), configured to acquire a trained tone conversion model by training the original tone conversion model based on the target audio data and synthesized audio data corresponding to each piece of the sample audio data.

**14.** An apparatus for tone conversion, comprising:

an acquiring module (61), configured to acquire source audio data and a tone feature of a target speaker; and a synthesizing module (62), configured to: acquire a tone feature of the source audio data by a tone extraction network in a pre-trained tone conversion model; acquire a semantic feature based on the tone feature and a linear spectrum corresponding to the source audio data by a tone removal network in the tone conversion model, wherein the semantic feature is a feature in the source audio data that is not related to a tone of a speaker but is related to semantic information; and acquire synthesized audio data based on the semantic feature and the tone feature of the target speaker by a vocoder in the tone conversion model.

**15.** A computer-readable storage medium, storing at least one computer program therein, wherein the at least one computer program, when loaded and run by a processor, causes the processor to perform the method for training a tone conversion model as defined in any of claims 1 to 10 or the method for tone conversion as defined in any of claims 11 to 12.

**Patentansprüche**

**1.** Verfahren zum Trainieren eines Tonumwandlungsmodells, umfassend:

Erfassen (S101) eines Probensatzes, wobei der Probensatz Probenaudiodaten von verschiedenen Sprechern enthält, wobei jedes Stück der Probenaudiodaten einem Stück von Zielaudiodaten entspricht, wobei die Zielaudiodaten und die Probenaudiodaten dieselben semantischen Informationen aufweisen;
Erfassen (S102) eines ersten Tonmerkmals eines beliebigen Stücks der Probenaudiodaten durch ein Tonextraktionsnetzwerk in einem Originaltonumwandlungsmodell; Erfassen eines ersten semantischen Merkmals basierend auf dem ersten Tonmerkmal und einem linearen Spektrum, das den Probenaudiodaten entspricht, durch ein Tonentfernungsnetzwerk in dem Originaltonumwandlungsmodell, wobei das erste semantische Merkmal ein Merkmal in den Probenaudiodaten ist, das sich nicht auf einen Ton des Sprechers bezieht, sondern auf die semantischen Informationen; und Erfassen von synthetisierten Audiodaten basierend auf dem ersten semantischen Merkmal und einem zweiten Tonmerkmal der Zielaudiodaten, die den Probenaudiodaten entsprechen, durch einen Vocoder in dem Originaltonumwandlungsmodell; und
Erfassen (S103) eines trainierten Tonumwandlungsmodells durch Trainieren des Originaltonumwandlungsmodells basierend auf den Zielaudiodaten und den synthetisierten Audiodaten, die jedem Stück der Probenaudiodaten entsprechen.

**2.** Verfahren nach Anspruch 1, wobei die Zielaudiodaten, die den Probenaudiodaten entsprechen, mindestens eines aus Folgendem umfassen: die Probenaudiodaten, Probenaudiodaten, die sich von dem Sprecher der Probenaudiodaten unterscheiden, oder Nicht-Probenaudiodaten, die sich von dem Sprecher der Probenaudiodaten unterscheiden.

**3.** Verfahren nach Anspruch 2, wobei Erfassen des zweiten Tonmerkmals der Zielaudiodaten, die den Probenaudiodaten entsprechen, Folgendes umfasst:

Bestimmen des ersten Tonmerkmals der Probenaudiodaten als das zweite Tonmerkmal als Antwort auf Bestimmen, dass die Zielaudiodaten die Probenaudiodaten sind; oder
Erfassen des zweiten Tonmerkmals der Zielaudiodaten durch das Tonextraktionsnetzwerk in dem Originaltonumwandlungsmodell als Antwort auf Bestimmen, dass die Zielaudiodaten nicht die Probenaudiodaten sind.

**4.** Verfahren nach Anspruch 1, wobei Erfassen des ersten semantischen Merkmals basierend auf dem ersten Tonmerkmal und dem linearen Spektrum, das den Probenaudiodaten entspricht, durch das Tonentfernungsnetzwerk in dem Originaltonumwandlungsmodell Folgendes umfasst:

Erfassen eines versteckten Vektors der semantischen Informationen in den Probenaudiodaten basierend auf dem ersten Tonmerkmal und dem linearen Spektrum, das den Probenaudiodaten entspricht, durch einen Posteriori-Encoder in dem Tonentfernungsnetzwerk; und
Erfassen des ersten semantischen Merkmals basierend auf dem versteckten Vektor durch ein Anreicherungs-Subnetzwerk in dem Tonentfernungsnetzwerk.

5. Verfahren nach Anspruch 4, weiter umfassend:

Erfassen eines zweiten semantischen Merkmals basierend auf einem beliebigen Stück der Probenaudiodaten durch ein semantisches Extraktionsnetzwerk in dem Originaltonumwandlungsmodell;
wobei Trainieren des Originaltonumwandlungsmodells basierend auf den Zielaudiodaten und den synthetisierten Audiodaten, die jedem Stück der Probenaudiodaten entsprechen, Folgendes umfasst:
Erfassen des trainierten Tonumwandlungsmodells durch Trainieren des Originaltonumwandlungsmodells basierend auf den Zielaudiodaten, die jedem Stück der Probenaudiodaten entsprechen, den synthetisierten Audiodaten, die jedem Stück der Probenaudiodaten entsprechen, dem ersten semantischen Merkmal, das jedem Stück der Probenaudiodaten entspricht, und dem zweiten semantischen Merkmal, das jedem Stück der Probenaudiodaten entspricht.

6. Verfahren nach Anspruch 5, wobei Erfassen des zweiten semantischen Merkmals basierend auf den Probenaudiodaten durch das semantische Extraktionsnetzwerk in dem Originaltonumwandlungsmodell Folgendes umfasst:

Erfassen eines Inhaltsmerkmals basierend auf den Probenaudiodaten durch ein erstes Inhalts-Subnetzwerk in dem semantischen Extraktionsnetzwerk;
Erfassen eines diskretisierten Inhaltsmerkmals basierend auf dem Inhaltsmerkmal durch ein zweites Inhalts-Subnetzwerk in dem semantischen Extraktionsnetzwerk; und
Erfassen des zweiten semantischen Merkmals basierend auf dem diskretisierten Inhaltsmerkmal durch ein drittes Inhalts-Subnetzwerk in dem semantischen Extraktionsnetzwerk.

7. Verfahren nach Anspruch 5 oder 6, wobei Trainieren des Originaltonumwandlungsmodells basierend auf den Zielaudiodaten, die jedem Stück der Probenaudiodaten entsprechen, den synthetisierten Audiodaten, die jedem Stück der Probenaudiodaten entsprechen, dem ersten semantischen Merkmal, das jedem Stück der Probenaudiodaten entspricht, und dem zweiten semantischen Merkmal, das jedem Stück der Probenaudiodaten entspricht, Folgendes umfasst:

Bestimmen eines Rekonstruktionsverlustwertes basierend auf den Zielaudiodaten, die jedem Stück der Probenaudiodaten entsprechen, und den synthetisierten Audiodaten, die jedem Stück der Probenaudiodaten entsprechen;
Bestimmen eines semantischen Verlustwertes basierend auf dem ersten semantischen Merkmal, das jedem Stück der Probenaudiodaten entspricht, und dem zweiten semantischen Merkmal, das jedem Stück der Probenaudiodaten entspricht;
Bestimmen eines zusammengesetzten Verlustwertes basierend auf dem Rekonstruktionsverlustwert und dem semantischen Verlustwert; und
Erfassen des trainierten Tonumwandlungsmodells durch Anpassen eines Parameterwertes eines Parameters in dem Originaltonumwandlungsmodell basierend auf dem zusammengesetzten Verlustwert.

8. Verfahren nach einem der Ansprüche 1 bis 7, weiter umfassend:

Erfassen eines Mittelwertvektors und eines Varianzvektors des versteckten Vektors basierend auf dem ersten Tonmerkmal und dem linearen Spektrum, das den Probenaudiodaten entspricht, durch den Posteriori-Encoder in dem Tonentfernungsnetzwerk;
wobei Bestimmen des semantischen Verlustwertes basierend auf dem ersten semantischen Merkmal, das jedem Stück der Probenaudiodaten entspricht, und dem zweiten semantischen Merkmal, das jedem Stück der Probenaudiodaten entspricht, Folgendes umfasst:
Bestimmen des semantischen Verlustwerts basierend auf dem ersten semantischen Merkmal, dem zweiten semantischen Merkmal, dem Mittelwertvektor und dem Varianzvektor, die jedem Stück der Probenaudiodaten entsprechen.

9. Verfahren nach Anspruch 6, wobei Trainieren des Originaltonumwandlungsmodells basierend auf den Zielaudiodaten, die jedem Stück der Probenaudiodaten entsprechen, den synthetisierten Audiodaten, die jedem Stück der Probenaudiodaten entsprechen, dem ersten semantischen Merkmal, das jedem Stück der Probenaudiodaten entspricht, und dem zweiten semantischen Merkmal, das jedem Stück der Probenaudiodaten entspricht, Folgendes umfasst:

Bestimmen eines Quantisierungsverlustwertes basierend auf dem Inhaltsmerkmal, das jedem Stück der Probenaudiodaten entspricht, und dem diskretisierten Inhaltsmerkmal, das jedem Stück der Probenaudiodaten entspricht; und

Bestimmen eines Kontrastlernverlustwertes basierend auf dem diskretisierten Inhaltsmerkmal, das jedem Stück der Probenaudiodaten entspricht, und dem zweiten semantischen Merkmal, das jedem Stück der Probenaudiodaten entspricht; und

Erfassen des trainierten Tonumwandlungsmodells durch Trainieren des Originaltonumwandlungsmodells basierend auf den Zielaudiodaten, die jedem Stück der Probenaudiodaten entsprechen, wobei die synthetisierten Audiodaten jedem Stück der Probenaudiodaten entsprechen, dem ersten semantischen Merkmal, das jedem Stück der Probenaudiodaten entspricht, dem zweiten semantischen Merkmal, das jedem Stück der Probenaudiodaten entspricht, dem Quantisierungsverlustwert und dem Kontrastlernverlustwert.

10. Verfahren nach einem der Ansprüche 1 bis 9, wobei beim Erfassen des trainierten Tonumwandlungsmodells das Verfahren weiter Folgendes umfasst:

Bestimmen von Tonmerkmalen, die jeweils verschiedenen Sprechern entsprechen, basierend auf dem Tonumwandlungsmodell und jedem Stück der Probenaudiodaten in dem Probensatz; und
entsprechendes Speichern von Objektkennungen und der Tonmerkmale, die jeweils den verschiedenen Sprechern entsprechen.

11. Verfahren zur Tonumwandlung, umfassend:

Erfassen (S301) von Quellenaudiodaten und eines Tonmerkmals eines Zielsprechers; und
Erfassen (S302) eines Tonmerkmals der Quellenaudiodaten durch ein Tonextraktionsnetzwerk in einem vortrainierten Tonumwandlungsmodell; Erfassen eines semantischen Merkmals basierend auf dem Tonmerkmal und einem linearen Spektrum, das den Quellenaudiodaten entspricht, durch ein Tonentfernungsnetzwerk in dem Tonumwandlungsmodell, wobei das semantische Merkmal ein Merkmal in den Quellenaudiodaten ist, das sich nicht auf einen Ton eines Sprechers bezieht, sondern sich auf semantische Informationen bezieht; und Erfassen von synthetisierten Audiodaten basierend auf dem semantischen Merkmal und dem Tonmerkmal des Zielsprechers durch einen Vocoder in dem Tonumwandlungsmodell.

12. Verfahren nach Anspruch 11, wobei Erfassen des Tonmerkmals des Zielsprechers Folgendes umfasst:

Erfassen von Informationen über den Zielsprecher; und
Bestimmen eines Tonmerkmals, das der Objektkennung des Zielsprechers entspricht, basierend auf einer Korrespondenz zwischen der gespeicherten Objektkennung und dem Tonmerkmal als Antwort auf Bestimmen, dass die Informationen des Zielsprechers eine Objektkennung sind; oder
Erfassen eines Tonmerkmals der Audiodaten durch das Tonextraktionsnetzwerk in dem Tonumwandlungsmodell als Antwort auf Bestimmen, dass die Informationen des Zielsprechers Audiodaten sind.

13. Vorrichtung zum Trainieren eines Tonumwandlungsmodells, umfassend:

eine Erfassungseinheit (51), die konfiguriert ist, um einen Probensatz zu erfassen, wobei der Probensatz Probenaudiodaten von verschiedenen Sprechern enthält, wobei jedes Stück der Probenaudiodaten einem Stück von Zielaudiodaten entspricht, wobei die Zielaudiodaten und die Probenaudiodaten dieselben semantischen Informationen aufweisen;
eine Verarbeitungseinheit (52), konfiguriert zum: Erfassen eines ersten Tonmerkmals eines beliebigen Stücks der Probenaudiodaten durch ein Tonextraktionsnetzwerk in einem Originaltonumwandlungsmodell; Erfassen eines ersten semantischen Merkmals basierend auf dem ersten Tonmerkmal und einem linearen Spektrum, das den Probenaudiodaten entspricht, durch ein Tonentfernungsnetzwerk in dem Originaltonumwandlungsmodell, wobei das erste semantische Merkmal ein Merkmal in den Probenaudiodaten ist, das sich nicht auf einen Ton des Sprechers bezieht, sondern sich auf die semantischen Informationen bezieht; und Erfassen von synthetisierten Audiodaten basierend auf dem ersten semantischen Merkmal und einem zweiten Tonmerkmal von Zielaudiodaten, die den Probenaudiodaten entsprechen, durch einen Vocoder in dem Originaltonumwandlungsmodell; und
eine Trainingseinheit (53), die konfiguriert ist, um ein trainiertes Tonumwandlungsmodell durch Trainieren des Originaltonumwandlungsmodell basierend auf den Zielaudiodaten und den synthetisierten Audiodaten zu erfassen, die jedem Stück der Probenaudiodaten entsprechen.

14. Vorrichtung zur Tonumwandlung, umfassend:

ein Erfassungsmodul (61), das konfiguriert ist, um Quellenaudiodaten und ein Tonmerkmal eines Zielsprechers zu erfassen; und

ein Synthesemodul (62), das konfiguriert ist zum: Erfassen eines Tonmerkmals der Quellenaudiodaten durch ein Tonextraktionsnetzwerk in einem vortrainierten Tonumwandlungsmodell; Erfassen eines semantischen Merkmals basierend auf dem Tonmerkmal und einem linearen Spektrum, das den Quellenaudiodaten entspricht, durch ein Tonentfernungsnetzwerk in dem Tonumwandlungsmodell, wobei das semantische Merkmal ein Merkmal in den Quellenaudiodaten ist, das sich nicht auf einen Ton eines Sprechers bezieht, sondern sich auf semantische Informationen bezieht; und Erfassen von synthetisierten Audiodaten basierend auf dem semantischen Merkmal und dem Tonmerkmal des Zielsprechers durch einen Vocoder in dem Tonumwandlungsmodell.

15. Computerlesbares Speichermedium, in dem mindestens ein Computerprogramm gespeichert ist, wobei das mindestens eine Computerprogramm, wenn es von einem Prozessor geladen und ausgeführt wird, den Prozessor veranlasst, das Verfahren zum Trainieren eines Tonumwandlungsmodells, wie in einem der Ansprüche 1 bis 10 definiert, oder das Verfahren zur Tonumwandlung, wie in einem der Ansprüche 11 bis 12 definiert, durchzuführen.


**Revendications**

1. Procédé d'entraînement d'un modèle de conversion de tonalité, comprenant :

l'acquisition (S101) d'un ensemble d'échantillons, dans lequel l'ensemble d'échantillons contient des données audio d'échantillon de différents orateurs, chaque élément des données audio d'échantillon correspondant à un élément de données audio cibles, les données audio cibles et les données audio d'échantillon ayant les mêmes informations sémantiques ;
l'acquisition (S102) d'une première caractéristique de tonalité d'un quelconque élément des données audio d'échantillon par un réseau d'extraction de tonalité dans un modèle de conversion de tonalité d'origine ;
l'acquisition d'une première caractéristique sémantique sur la base de la première caractéristique de tonalité et d'un spectre linéaire correspondant aux données audio d'échantillon par un réseau de suppression de tonalité dans le modèle de conversion de tonalité d'origine, dans lequel la première caractéristique sémantique est une caractéristique dans les données audio d'échantillon qui n'est pas liée à une tonalité de l'orateur, mais est liée aux informations sémantiques ; et l'acquisition de données audio synthétisées sur la base de la première caractéristique sémantique et d'une seconde caractéristique de tonalité des données audio cibles correspondant aux données audio d'échantillon par un vocodeur dans le modèle de conversion de tonalité d'origine ; et
l'acquisition (S103) d'un modèle de conversion de tonalité entraîné en entraînant le modèle de conversion de tonalité d'origine sur la base des données audio cibles et de données audio synthétisées correspondant à chaque élément des données audio d'échantillon.

2. Procédé selon la revendication 1, dans lequel les données audio cibles correspondant aux données audio d'échantillon comprennent au moins l'une parmi : les données audio d'échantillon, des données audio d'échantillon différentes de l'orateur des données audio d'échantillon, ou des données audio non d'échantillon différentes de l'orateur des données audio d'échantillon.

3. Procédé selon la revendication 2, dans lequel l'acquisition de la seconde caractéristique de tonalité des données audio cibles correspondant aux données audio d'échantillon comprend :

la détermination de la première caractéristique de tonalité des données audio d'échantillon en tant que la seconde caractéristique de tonalité en réponse à la détermination que les données audio cibles sont les données audio d'échantillon ; ou
l'acquisition de la seconde caractéristique de tonalité des données audio cibles par le réseau d'extraction de tonalité dans le modèle de conversion de tonalité d'origine en réponse à la détermination que les données audio cibles ne sont pas les données audio d'échantillon.

4. Procédé selon la revendication 1, dans lequel l'acquisition de la première caractéristique sémantique sur la base de la première caractéristique de tonalité et du spectre linéaire correspondant aux données audio d'échantillon par le réseau de suppression de tonalité dans le modèle de conversion de tonalité d'origine comprend :

l'acquisition d'un vecteur caché des informations sémantiques dans les données audio d'échantillon sur la base de la première caractéristique de tonalité et du spectre linéaire correspondant aux données audio d'échantillon par un encodeur a posteriori dans le réseau de suppression de tonalité ; et

l'acquisition de la première caractéristique sémantique sur la base du vecteur caché par un sous-réseau d'amélioration dans le réseau de suppression de tonalité.

**5.** Procédé selon la revendication 4, comprenant en outre :

l'acquisition d'une seconde caractéristique sémantique sur la base d'un quelconque élément des données audio d'échantillon par un réseau d'extraction sémantique dans le modèle de conversion de tonalité d'origine ;

dans lequel l'entraînement du modèle de conversion de tonalité d'origine sur la base des données audio cibles et des données audio synthétisées correspondant à chaque élément des données audio d'échantillon comprend : l'acquisition du modèle de conversion de tonalité entraîné en entraînant le modèle de conversion de tonalité d'origine sur la base des données audio cibles correspondant à chaque élément des données audio d'échantillon, des données audio synthétisées correspondant à chaque élément des données audio d'échantillon, de la première caractéristique sémantique correspondant à chaque élément des données audio d'échantillon, et de la seconde caractéristique sémantique correspondant à chaque élément des données audio d'échantillon.

**6.** Procédé selon la revendication 5, dans lequel l'acquisition de la seconde caractéristique sémantique sur la base des données audio d'échantillon par le réseau d'extraction sémantique dans le modèle de conversion de tonalité d'origine comprend :

l'acquisition d'une caractéristique de contenu sur la base des données audio d'échantillon par un premier sous-réseau de contenu dans le réseau d'extraction sémantique ;

l'acquisition d'une caractéristique de contenu discrétisé sur la base de la caractéristique de contenu par un deuxième sous-réseau de contenu dans le réseau d'extraction sémantique ; et

l'acquisition de la seconde caractéristique sémantique sur la base de la caractéristique de contenu discrétisé par un troisième sous-réseau de contenu dans le réseau d'extraction sémantique.

**7.** Procédé selon la revendication 5 ou la revendication 6, dans lequel l'entraînement du modèle de conversion de tonalité d'origine sur la base des données audio cibles correspondant à chaque élément des données audio d'échantillon, des données audio synthétisées correspondant à chaque élément des données audio d'échantillon, de la première caractéristique sémantique correspondant à chaque élément des données audio d'échantillon, et de la seconde caractéristique sémantique correspondant à chaque élément des données audio d'échantillon comprend :

la détermination d'une valeur de perte de reconstruction sur la base des données audio cibles correspondant à chaque élément des données audio d'échantillon et des données audio synthétisées correspondant à chaque élément des données audio d'échantillon ;

la détermination d'une valeur de perte sémantique sur la base de la première caractéristique sémantique correspondant à chaque élément des données audio d'échantillon et de la seconde caractéristique sémantique correspondant à chaque élément des données audio d'échantillon ;

la détermination d'une valeur de perte composite sur la base de la valeur de perte de reconstruction et de la valeur de perte sémantique ; et

l'acquisition du modèle de conversion de tonalité entraîné en ajustant une valeur de paramètre d'un paramètre dans le modèle de conversion de tonalité d'origine sur la base de la valeur de perte composite.

**8.** Procédé selon l'une quelconque des revendications 1 à 7, comprenant en outre :

l'acquisition d'un vecteur de moyenne et d'un vecteur de variance du vecteur caché sur la base de la première caractéristique de tonalité et du spectre linéaire correspondant aux données audio d'échantillon par l'encodeur a posteriori dans le réseau de suppression de tonalité ;

dans lequel la détermination de la valeur de perte sémantique sur la base de la première caractéristique sémantique correspondant à chaque élément des données audio d'échantillon et de la seconde caractéristique sémantique correspondant à chaque élément des données audio d'échantillon comprend :

la détermination de la valeur de perte sémantique sur la base de la première caractéristique sémantique, de la seconde caractéristique sémantique, du vecteur de moyenne, et du vecteur de variance qui correspondent à chaque élément des données audio d'échantillon.

**9.** Procédé selon la revendication 6, dans lequel l'entraînement du modèle de conversion de tonalité d'origine sur la base des données audio cibles correspondant à chaque élément des données audio d'échantillon, des données audio synthétisées correspondant à chaque élément des données audio d'échantillon, de la première caractéristique sémantique correspondant à chaque élément des données audio d'échantillon, et de la seconde caractéristique sémantique correspondant à chaque élément des données audio d'échantillon comprend :

la détermination d'une valeur de perte de quantification sur la base de la caractéristique de contenu correspondant à chaque élément des données audio d'échantillon et de la caractéristique de contenu discrétisé correspondant à chaque élément des données audio d'échantillon ; et

la détermination d'une valeur de perte d'apprentissage de contraste sur la base de la caractéristique de contenu discrétisé correspondant à chaque élément des données audio d'échantillon et de la seconde caractéristique sémantique correspondant à chaque élément des données audio d'échantillon ; et

l'acquisition du modèle de conversion de tonalité entraîné en entraînant le modèle de conversion de tonalité d'origine sur la base des données audio cibles correspondant à chaque élément des données audio d'échantillon, des données audio synthétisées correspondant à chaque élément des données audio d'échantillon, de la première caractéristique sémantique correspondant à chaque élément des données audio d'échantillon, de la seconde caractéristique sémantique correspondant à chaque élément des données audio d'échantillon, de la valeur de perte de quantification, et de la valeur de perte d'apprentissage de contraste.

10. Procédé selon l'une quelconque des revendications 1 à 9, dans lequel, lors de l'acquisition du modèle de conversion de tonalité entraîné, le procédé comprend en outre :

la détermination de caractéristiques de tonalité correspondant respectivement à différents orateurs sur la base du modèle de conversion de tonalité et de chaque élément des données audio d'échantillon dans l'ensemble d'échantillons ; et

la sauvegarde correspondante d'identifiants d'objet et des caractéristiques de tonalité correspondant respectivement aux différents orateurs.

11. Procédé de conversion de tonalité, comprenant :

l'acquisition (S301) de données audio sources et d'une caractéristique de tonalité d'un orateur cible ; et

l'acquisition (S302) d'une caractéristique de tonalité des données audio sources par un réseau d'extraction de tonalité dans un modèle de conversion de tonalité pré-entraîné ; l'acquisition d'une caractéristique sémantique sur la base de la caractéristique de tonalité et d'un spectre linéaire correspondant aux données audio sources par un réseau de suppression de tonalité dans le modèle de conversion de tonalité, dans lequel la caractéristique sémantique est une caractéristique dans les données audio sources qui n'est pas liée à une tonalité d'un orateur, mais est liée à des informations sémantiques ; et l'acquisition de données audio synthétisées sur la base de la caractéristique sémantique et de la caractéristique de tonalité de l'orateur cible par un vocodeur dans le modèle de conversion de tonalité.

12. Procédé selon la revendication 11, dans lequel l'acquisition de la caractéristique de tonalité de l'orateur cible comprend :

l'acquisition d'informations concernant l'orateur cible ; et

la détermination d'une caractéristique de tonalité correspondant à l'identifiant d'objet de l'orateur cible sur la base d'une correspondance entre l'identifiant d'objet sauvegardé et de la caractéristique de tonalité en réponse à la détermination que les informations de l'orateur cible est un identifiant d'objet ; ou

l'acquisition d'une caractéristique de tonalité des données audio par le réseau d'extraction de tonalité dans le modèle de conversion de tonalité en réponse à la détermination que les informations de l'orateur cible sont des données audio.

13. Appareil d'entraînement d'un modèle de conversion de tonalité, comprenant :

une unité d'acquisition (51), configurée pour acquérir un ensemble d'échantillons, dans lequel l'ensemble d'échantillons contient des données audio d'échantillon de différents orateurs, chaque élément des données audio d'échantillon correspondant à un élément de données audio cibles, les données audio cibles et les données audio d'échantillon ayant les mêmes informations sémantiques ;

une unité de traitement (52), configurée pour : acquérir une première caractéristique de tonalité d'un quelconque élément des données audio d'échantillon par un réseau d'extraction de tonalité dans un modèle de conversion de tonalité d'origine ; acquérir une première caractéristique sémantique sur la base de la première caractéristique de tonalité et d'un spectre linéaire correspondant aux données audio d'échantillon par un réseau de suppression de tonalité dans le modèle de conversion de tonalité d'origine, dans lequel la première caractéristique sémantique est une caractéristique dans les données audio d'échantillon qui n'est pas liée à une tonalité de l'orateur, mais est liée aux informations sémantiques ; et acquérir des données audio synthétisées sur la base de la première caractéristique sémantique et d'une seconde caractéristique de tonalité de données audio cibles correspondant aux données audio d'échantillon par un vocodeur dans le modèle de conversion de tonalité d'origine ; et

une unité d'entraînement (53), configurée pour acquérir un modèle de conversion de tonalité entraîné en entraînant le modèle de conversion de tonalité d'origine sur la base des données audio cibles et des données audio synthétisées correspondant à chaque élément des données audio d'échantillon.

14. Appareil de conversion de tonalité, comprenant :

un module d'acquisition (61), configuré pour acquérir des données audio sources et une caractéristique de tonalité d'un orateur cible ; et

un module de synthèse (62), configuré pour : acquérir une caractéristique de tonalité des données audio sources par un réseau d'extraction de tonalité dans un modèle de conversion de tonalité pré-entraîné ; acquérir une caractéristique sémantique sur la base de la caractéristique de tonalité et d'un spectre linéaire correspondant aux données audio sources par un réseau de suppression de tonalité dans le modèle de conversion de tonalité, dans lequel la caractéristique sémantique est une caractéristique dans les données audio sources qui n'est pas liée à une tonalité d'un orateur, mais est liée à des informations sémantiques ; et acquérir des données audio synthétisées sur la base de la caractéristique sémantique et de la caractéristique de tonalité de l'orateur cible par un vocodeur dans le modèle de conversion de tonalité.

15. Support de stockage lisible par ordinateur, stockant au moins un programme informatique dans celui-ci, dans lequel ledit au moins un programme informatique, lorsqu'il est chargé et exécuté par un processeur, amène le processeur à réaliser le procédé d'entraînement d'un modèle de conversion de tonalité tel que défini dans l'une quelconque des revendications 1 à 10 ou le procédé de conversion de tonalité tel que défini dans l'une quelconque des revendications 11 à 12.

Acquire a sample set, wherein the sample set contains sample audio data of different speakers, each piece of the sample audio data corresponds to a piece of target audio data, and the target audio data and the sample audio data have the same semantic information

S101

Acquire a first tone feature of any piece of the sample audio data by a tone extraction network in the original tone conversion model; acquire a first semantic feature based on the tone feature and a linear spectrum corresponding to the sample audio data by a tone removal network in the original tone conversion model, wherein the first semantic feature is a feature unrelated to a tone of the speaker and related to semantic information in the sample audio data; and acquire synthesized audio data based on the first semantic feature and a second tone feature of the target audio data corresponding to the sample audio data by a vocoder in the original tone conversion model

S102

Based on the target audio data and the synthesized audio data corresponding to each piece of the sample audio data, acquire a trained tone conversion model by training the original tone conversion model

S103

**FIG. 1**

raw
waveform

VQCPC

g-net

rk,n-2  rk,n-1  rk,n

decoder

$\hat{z}_{k,n-2}\,\hat{z}_{k,n-1}\,\hat{z}_{k,n}\,\hat{z}_{k,n+1}\,\hat{z}_{k,n+2}$

first semantic feature

Vector Quantization（VQ）

$Z_{k,n-2}\ \ Z_{k,n-1}\ \ Z_{k,n}\ \ Z_{k,n+1}\ \ Z_{k,n+2}\ \ \ ...$

flow

first semantic feature

second semantic feature

linear layer

ReLU

Zsq

linear layer

×4

speaker
inner
embedding

speaker
encoder

tone_vector

posterior
encoder

layer normalization

conv layer

Mel frequency spectrum

linear
spectrogrm

**FIG. 2**

Acquire source audio data and a tone feature of a target speaker — S301

Acquire a tone feature of the source audio data by a tone extraction network in a pre-trained tone conversion model; acquire a semantic feature based on the tone feature and a linear spectrum corresponding to the source audio data by a tone removal network in the tone conversion model, wherein the semantic feature is a feature of the source audio data that is not related to the tone of the speaker but is related to semantic information; and acquire synthesized audio data based on the semantic feature and the tone feature of the target speaker by a vocoder in the tone conversion model — S302

**FIG. 3**

raw
waveform

decoder

semantic feature

flow

$Z_{sq}$

speaker
inner
embedding

speaker
encoder

—tone_vector→

posterior
encoder

Reference-wav
Mel
spectrogrm

linear
spectrogrm

Target-tone
sid

**FIG. 4**

51

52

53

acquiring unit

processing unit

training unit

**FIG. 5**

```
        ┌─ 61                      ┌─ 62
┌──────────────────┐      ┌──────────────────┐
│                  │      │                  │
│ acquiring module │──────│   synthesizing   │
│                  │      │      module      │
└──────────────────┘      └──────────────────┘
```

**FIG. 6**

```
              ┌─ 71
     ┌──────────────────┐
     │                  │
     │    processor     │
     │                  │
     └──────────────────┘
            │                              ┌─ 73
  74 ─┐     │                   ┌──────────────────┐
      │     │                   │                  │
      └─────┴───────────────────┤     memory       │
                    │           │                  │
                    │           └──────────────────┘
           ┌──────────────────┐
           │  communication   │─── 72
           │    interface     │
           └──────────────────┘
```

**FIG. 7**

```
              ┌─ 81
     ┌──────────────────┐
     │                  │
     │    processor     │
     │                  │
     └──────────────────┘
            │                              ┌─ 83
  84 ─┐     │                   ┌──────────────────┐
      │     │                   │                  │
      └─────┴───────────────────┤     memory       │
                    │           │                  │
                    │           └──────────────────┘
           ┌──────────────────┐
           │  communication   │─── 82
           │    interface     │
           └──────────────────┘
```

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Towards End-to-End Prosody Transfer for Expressive Speech Synthesis with Tacotron. **RJ SKERRY-RYAN et al.** ARXIV.ORG. CORNELL UNIVERSITY LIBRARY, 24 March 2018